# EUROPEAN PATENT SPECIFICATION

(11) **EP 4 324 267 B1**
(45) Date of publication and mention of the grant of the patent: **22.04.2026**
(21) Application number: 22718350.6
(22) Date of filing: 14.03.2022
(51) Int. Cl.: H04L 65/10, H04W 68/00, H04W 72/04

(54) **TECHNIQUES FOR MOBILE TERMINATED CALLS IN NON-TERRESTRIAL NETWORKS**
VERFAHREN FÜR MOBILE TERMINIERTE ANRUFE IN NICHT TERRESTRISCHEN NETZWERKEN
TECHNIQUES POUR DES APPELS TERMINÉS MOBILES DANS DES RÉSEAUX NON TERRESTRES

(30) Priority: 14.04.2021 US 202117230676
(43) Date of publication of application: 21.02.2024
(73) Proprietor: QUALCOMM INCORPORATED, San Diego, California 92121-1714 (US)
(72) Inventor: PHUYAL, Umesh, San Diego, California 92121-1714 (US); GAAL, Peter, San Diego, California 92121-1714 (US); RICO ALVARINO, Alberto, San Diego, California 92121-1714 (US); SHRESTHA, Bharat, San Diego, California 92121-1714 (US); WANG, Xiao Feng, San Diego, California 92121-1714 (US); KITAZOE, Masato, San Diego, California 92121-1714 (US)
(74) Representative: Jaeger, Michael David
(86) International application number: PCT/US2022/020202
(87) International publication number: WO 2022/220972

(56) References cited:
- WO-A1-2021/031098
- US-A1- 2020 252 967
- US-A1- 2021 022 110

## Description

### CROSS REFERENCE

The present Application for Patent claims the benefit of U.S. Patent Application No. 17/230,676 by PHUYAL et al., entitled "TECHNIQUES FOR MOBILE TERMINATED CALLS IN NON-TERRESTRIAL NETWORKS," filed April 14, 2021, assigned to the assignee hereof.

### FIELD OF TECHNOLOGY

The following relates to wireless communications, including techniques for mobile terminated calls in non-terrestrial networks.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM).

A wireless multiple-access communications system may include one or more base stations or one or more network access nodes, each supporting communication for multiple communication devices, which may be known as user equipment (UE). Some wireless communications systems may support communications with non-terrestrial devices. Communications in wireless communications systems supporting non-terrestrial devices may be improved. The prior art document US2021022110 A1 shows how a wireless device determines a delay time based on a serving cell signal, then the wireless device monitors for paging signal during the determined delay time.

### SUMMARY

The present invention is defined by the subject-matter of the independent claims. Further detailed embodiments are defined in the dependent claims. The described techniques relate to improved techniques, devices, and apparatuses that support techniques for voice calls (e.g., mobile-terminated calls) in wireless communications systems, such as a non-terrestrial network (NTN). The described techniques provide devices of a wireless communications system with a delay time, a pre-paging alert, or a combination thereof. The techniques may enable the devices to realize improved coverage and channel quality, among other advantages. For example, a user equipment (UE) may receive a paging message indicating that a network node (e.g., a satellite, a base station, and the like) has information to transmit to the UE. In some examples, the UE may use a delay between receiving the paging message and transmitting response(s) to the paging message to establish a connection with the network node, which may help establish a bi-directional communication link (e.g., the UE may initiate a timer, the UE may request and wait for user input prior to establishing communications, or both, among other examples of implementing a delay). Additionally or alternatively, the UE may determine that a measurement of a communication link satisfies a threshold (e.g., the communication link may be relatively poor) and the UE may implement the delay based on receiving the paging message and the threshold being satisfied. Such techniques may enable the UE to implement a delay between receiving the paging message and establishing an uplink connection with the network node, which may result in improved channel conditions (e.g., a user of the UE may move the UE to a different position with improved coverage during the delay).

Additionally or alternatively, the UE may receive a pre-paging alert from the network node prior to receiving the paging message. For example, the network node may transmit the pre-paging alert indicating that the network node intends to transmit a paging message (e.g., a high priority paging message) to the UE. The UE may initiate the timer (or wait for user input) in response to receiving the pre-paging alert (e.g., a downlink alert message). Implementing a delay between receiving the pre-paging alert and receiving the paging alert (or establishing a connection with the network node) in response to the pre-paging alert may result in improved coverage and communications reliability.

A method for wireless communications at a user equipment (UE) is described. The method may include receiving, from a network node, a paging message indicating information for communication between the network node and the UE, identifying a delay based on receiving the paging message, a condition of a communication link satisfying a threshold, or a combination thereof, establishing an uplink connection with the network node based on an expiration of the delay, and communicating the information using the uplink connection.

An apparatus for wireless communications at a UE is described. The apparatus may include a processor, memory coupled with the processor, and instructions stored in the memory. The instructions may be executable by the processor to cause the apparatus to receive, from a network node, a paging message indicating information for communication between the network node and the UE, identify a delay based on receiving the paging message, a condition of a communication link satisfying a threshold, or a combination thereof, establish an uplink connection with the network node based on an expiration of the delay, and communicate the information using the uplink connection.

Another apparatus for wireless communications at a UE is described. The apparatus may include means for receiving, from a network node, a paging message indicating information for communication between the network node and the UE, means for identifying a delay based on receiving the paging message, a condition of a communication link satisfying a threshold, or a combination thereof, means for establishing an uplink connection with the network node based on an expiration of the delay, and means for communicating the information using the uplink connection.

A non-transitory computer-readable medium storing code for wireless communications at a UE is described. The code may include instructions executable by a processor to receive, from a network node, a paging message indicating information for communication between the network node and the UE, identify a delay based on receiving the paging message, a condition of a communication link satisfying a threshold, or a combination thereof, establish an uplink connection with the network node based on an expiration of the delay, and communicate the information using the uplink connection.

Some examples of the method, apparatuses, and non-transitory computer-readable medium described herein may further include operations, features, means, or instructions for initiating, at the UE, a timer based on receiving the paging message and the condition of the communication link satisfying the threshold, where the delay includes a duration of the timer.

Some examples of the method, apparatuses, and non-transitory computer-readable medium described herein may further include operations, features, means, or instructions for receiving, at the UE, input from a user of the UE, where the delay includes a duration between receiving the paging message and receiving the input from the user.

Some examples of the method, apparatuses, and non-transitory computer-readable medium described herein may further include operations, features, means, or instructions for receiving, at a non-access stratum layer of the UE, an indication of the received paging message from a radio resource control layer, where establishing the uplink connection may be in response to the expiration of the delay after receiving the indication.

Some examples of the method, apparatuses, and non-transitory computer-readable medium described herein may further include operations, features, means, or instructions for transmitting, from the radio resource control layer in response to receiving the indication and in response to the expiration of the delay, an indication for the non-access stratum layer to establish the uplink connection.

Some examples of the method, apparatuses, and non-transitory computer-readable medium described herein may further include operations, features, means, or instructions for establishing the uplink connection based on the received indication.

Some examples of the method, apparatuses, and non-transitory computer-readable medium described herein may further include operations, features, means, or instructions for determining a duration of a timer corresponding to the delay based on a configuration of the UE, the condition of the communication link, a measurement of the communication link, an uplink parameter of the communication link, an antenna configuration, or a combination thereof, where identifying the delay may be based on determining the duration.

Some examples of the method, apparatuses, and non-transitory computer-readable medium described herein may further include operations, features, means, or instructions for receiving control signaling indicating a duration of the delay, where identifying the delay may be based on receiving the control signaling.

In some examples of the method, apparatuses, and non-transitory computer-readable medium described herein, the control signaling includes radio resource control signaling, signaling of a control element of a medium access control layer, a system information block broadcast, or any combination thereof.

Some examples of the method, apparatuses, and non-transitory computer-readable medium described herein may further include operations, features, means, or instructions for determining the condition of the communication link based on receiving the paging message, the condition indicating one or more channel conditions, comparing the measurement with the threshold, where the threshold may be indicated via control signaling or a configuration of the UE, and determining that the condition satisfies the threshold based on the comparing, where identifying the delay may be based on determining that the condition satisfies the threshold.

In some examples of the method, apparatuses, and non-transitory computer-readable medium described herein, the condition includes a reference signal received power measurement, a received signal strength indicator measurement, a signal to noise ratio measurement, an uplink parameter of the communication link, an antenna configuration, or any combination thereof.

Some examples of the method, apparatuses, and non-transitory computer-readable medium described herein may further include operations, features, means, or instructions for monitoring for a response from the network node and detecting that one or more uplink communication attempts may have failed based on monitoring for the response from the network node, where identifying the delay may be based on detecting that the one or more uplink communication attempts may have failed.

Some examples of the method, apparatuses, and non-transitory computer-readable medium described herein may further include operations, features, means, or instructions for causing the UE to output one or more indications of one or more requested actions to improve link performance based on identifying the delay, where establishing the uplink connection may be based on the one or more requested actions.

In some examples of the method, apparatuses, and non-transitory computer-readable medium described herein, establishing the uplink connection may include operations, features, means, or instructions for transmitting a paging response message based on the paging message and the expiration of the delay.

In some examples of the method, apparatuses, and non-transitory computer-readable medium described herein, establishing the uplink connection may include operations, features, means, or instructions for initiating a mobile originated message based on the expiration of the delay.

In some examples of the method, apparatuses, and non-transitory computer-readable medium described herein, receiving the paging message may include operations, features, means, or instructions for receiving an indication of a priority of the information, where identifying the delay may be based on the priority of the information satisfying a priority threshold.

Some examples of the method, apparatuses, and non-transitory computer-readable medium described herein may further include operations, features, means, or instructions for transmitting a capability message to the network node, where receiving the indication of the priority of the information may be based on the capability message.

A method for wireless communications at a UE is described. The method may include receiving, from a network node, a downlink alert message indicating a subsequent transmission of a paging message to the UE, identifying, at the UE, a delay based on receiving the downlink alert message, establishing an uplink connection with the network node based on receiving the downlink alert message and an expiration of the delay, and communicating information using the established uplink connection.

An apparatus for wireless communications at a UE is described. The apparatus may include a processor, memory coupled with the processor, and instructions stored in the memory. The instructions may be executable by the processor to cause the apparatus to receive, from a network node, a downlink alert message indicating a subsequent transmission of a paging message to the UE, identify, at the UE, a delay based on receiving the downlink alert message, establish an uplink connection with the network node based on receiving the downlink alert message and an expiration of the delay, and communicate information using the established uplink connection.

Another apparatus for wireless communications at a UE is described. The apparatus may include means for receiving, from a network node, a downlink alert message indicating a subsequent transmission of a paging message to the UE, means for identifying, at the UE, a delay based on receiving the downlink alert message, means for establishing an uplink connection with the network node based on receiving the downlink alert message and an expiration of the delay, and means for communicating information using the established uplink connection.

A non-transitory computer-readable medium storing code for wireless communications at a UE is described. The code may include instructions executable by a processor to receive, from a network node, a downlink alert message indicating a subsequent transmission of a paging message to the UE, identify, at the UE, a delay based on receiving the downlink alert message, establish an uplink connection with the network node based on receiving the downlink alert message and an expiration of the delay, and communicate information using the established uplink connection.

Some examples of the method, apparatuses, and non-transitory computer-readable medium described herein may further include operations, features, means, or instructions for initiating, at the UE, a timer based on receiving the paging message, where the delay includes a duration of the timer.

Some examples of the method, apparatuses, and non-transitory computer-readable medium described herein may further include operations, features, means, or instructions for receiving, at the UE, input from a user of the UE, where the delay includes a duration between receiving the downlink alert message and receiving the input from the user.

Some examples of the method, apparatuses, and non-transitory computer-readable medium described herein may further include operations, features, means, or instructions for receiving, based on the downlink alert message, the paging message and transmitting a paging response message based on receiving the paging message, where establishing the uplink connection may be based on the paging response message.

In some examples of the method, apparatuses, and non-transitory computer-readable medium described herein, receiving the downlink alert message may include operations, features, means, or instructions for receiving a sequence associated with the downlink alert message, where the sequence corresponds to an identifier of the UE, the sequence may be configured by the network node via control signaling, the sequence corresponds to a group of UEs including the UE, or any combination thereof.

Some examples of the method, apparatuses, and non-transitory computer-readable medium described herein may further include operations, features, means, or instructions for searching for the sequence associated with the downlink alert message, where the sequence operates at a first signal to noise ratio lower than a second signal to noise ratio associated with a sync signal from the network node.

Some examples of the method, apparatuses, and non-transitory computer-readable medium described herein may further include operations, features, means, or instructions for identifying the sequence based on the identifier, a mapping associated with the downlink alert message, or both, where the identifier of the UE may be negotiated over a non-access stratum layer, the mapping depends on a temporary user identifier, the downlink alert message includes an eight bit or sixteen bit medium access control identifier, or any combination thereof.

In some examples of the method, apparatuses, and non-transitory computer-readable medium described herein, establishing the uplink connection may include operations, features, means, or instructions for initiating a mobile originated message based on the expiration of the delay.

Some examples of the method, apparatuses, and non-transitory computer-readable medium described herein may further include operations, features, means, or instructions for receiving control signaling indicating a duration of a timer corresponding to the delay, where the control signaling includes radio resource control signaling, signaling of a control element of a medium access control layer, a system information block broadcast, or any combination thereof.

In some examples of the method, apparatuses, and non-transitory computer-readable medium described herein, the information may be associated with a priority that satisfies a priority threshold and receiving the downlink alert message may be based on the information being associated with the priority that satisfies the priority threshold.

In some examples of the method, apparatuses, and non-transitory computer-readable medium described herein, the information corresponds to an emergency use, and receiving the downlink alert message may be based on the information corresponding to the emergency use, an indication from a core network of the downlink alert message, or a combination thereof.

Some examples of the method, apparatuses, and non-transitory computer-readable medium described herein may further include operations, features, means, or instructions for causing the UE to output one or more indications of one or more requested actions to improve link performance based on identifying the delay, where establishing the uplink connection may be based on the one or more requested actions.

A method for wireless communications at a network node is described. The method may include transmitting, to a UE, a paging message indicating information for communication between the network node and the UE, identifying, at the network node, a delay based on transmitting the paging message, establishing a downlink connection with the UE based on an expiration of the delay, and communicating the information using the downlink connection.

An apparatus for wireless communications at a network node is described. The apparatus may include a processor, memory coupled with the processor, and instructions stored in the memory. The instructions may be executable by the processor to cause the apparatus to transmit, to a UE, a paging message indicating information for communication between the network node and the UE, identify, at the network node, a delay based on transmitting the paging message, establish a downlink connection with the UE based on an expiration of the delay, and communicate the information using the downlink connection.

Another apparatus for wireless communications at a network node is described. The apparatus may include means for transmitting, to a UE, a paging message indicating information for communication between the network node and the UE, means for identifying, at the network node, a delay based on transmitting the paging message, means for establishing a downlink connection with the UE based on an expiration of the delay, and means for communicating the information using the downlink connection.

A non-transitory computer-readable medium storing code for wireless communications at a network node is described. The code may include instructions executable by a processor to transmit, to a UE, a paging message indicating information for communication between the network node and the UE, identify, at the network node, a delay based on transmitting the paging message, establish a downlink connection with the UE based on an expiration of the delay, and communicate the information using the downlink connection.

Some examples of the method, apparatuses, and non-transitory computer-readable medium described herein may further include operations, features, means, or instructions for initiating, at the network node, a timer based on transmitting the paging message, where the delay includes a duration of the timer.

Some examples of the method, apparatuses, and non-transitory computer-readable medium described herein may further include operations, features, means, or instructions for transmitting control signaling indicating a duration of a timer corresponding to the delay, where the delay includes the duration of the timer.

In some examples of the method, apparatuses, and non-transitory computer-readable medium described herein, the control signaling includes radio resource control signaling, signaling of a control element of a medium access control layer, a system information block broadcast, or any combination thereof.

A method for wireless communications at a network node is described. The method may include transmitting, to a UE, a downlink alert message indicating a subsequent transmission of a paging message to the UE, identifying, at the network node, a delay based on receiving the downlink alert message, establishing a downlink connection with the UE based on transmitting the downlink alert message and an expiration of the delay, and communicating information using the established downlink connection.

An apparatus for wireless communications at a network node is described. The apparatus may include a processor, memory coupled with the processor, and instructions stored in the memory. The instructions may be executable by the processor to cause the apparatus to transmit, to a UE, a downlink alert message indicating a subsequent transmission of a paging message to the UE, identify, at the network node, a delay based on receiving the downlink alert message, establish a downlink connection with the UE based on transmitting the downlink alert message and an expiration of the delay, and communicate information using the established downlink connection.

Another apparatus for wireless communications at a network node is described. The apparatus may include means for transmitting, to a UE, a downlink alert message indicating a subsequent transmission of a paging message to the UE, means for identifying, at the network node, a delay based on receiving the downlink alert message, means for establishing a downlink connection with the UE based on transmitting the downlink alert message and an expiration of the delay, and means for communicating information using the established downlink connection.

A non-transitory computer-readable medium storing code for wireless communications at a network node is described. The code may include instructions executable by a processor to transmit, to a UE, a downlink alert message indicating a subsequent transmission of a paging message to the UE, identify, at the network node, a delay based on receiving the downlink alert message, establish a downlink connection with the UE based on transmitting the downlink alert message and an expiration of the delay, and communicate information using the established downlink connection.

Some examples of the method, apparatuses, and non-transitory computer-readable medium described herein may further include operations, features, means, or instructions for transmitting, based on transmitting the downlink alert message, the paging message and receiving a paging response message based on transmitting the paging message, where establishing the downlink connection may be based on the paging response message.

In some examples of the method, apparatuses, and non-transitory computer-readable medium described herein, transmitting the downlink alert message may include operations, features, means, or instructions for transmitting a sequence associated with the downlink alert message, where the sequence corresponds to an identifier of the UE, the sequence may be configured by the network node via control signaling, the sequence corresponds to a group of UEs including the UE, or any combination thereof.

In some examples of the method, apparatuses, and non-transitory computer-readable medium described herein, the information may be associated with a priority that satisfies a priority threshold and transmitting the downlink alert message may be based on the information being associated with the priority that satisfies the priority threshold.

### BRIEF DESCRIPTION OF THE DRAWINGS

FIGs. 1 and 2 illustrate examples of wireless communications systems that support techniques for mobile terminated calls in non-terrestrial networks (NTNs) in accordance with aspects of the present disclosure.
FIG. 3 illustrates an example of a flow diagram that supports techniques for mobile terminated calls in non-terrestrial networks in accordance with aspects of the present disclosure.
FIG. 4 illustrates an example of a flow diagram that supports techniques for mobile terminated calls in non-terrestrial networks in accordance with aspects of the present disclosure.
FIG. 5 illustrates an example of a flow diagram that supports techniques for mobile terminated calls in non-terrestrial networks in accordance with aspects of the present disclosure.
FIG. 6 illustrates an example of a process flow that supports techniques for mobile terminated calls in non-terrestrial networks in accordance with aspects of the present disclosure.
FIG. 7 illustrates an example of a process flow that supports techniques for mobile terminated calls in non-terrestrial networks in accordance with aspects of the present disclosure.
FIGs. 8 and 9 show block diagrams of devices that support techniques for mobile terminated calls in non-terrestrial networks in accordance with aspects of the present disclosure.
FIG. 10 shows a block diagram of a communications manager that supports techniques for mobile terminated calls in non-terrestrial networks in accordance with aspects of the present disclosure.
FIG. 11 shows a diagram of a system including a device that supports techniques for mobile terminated calls in non-terrestrial networks in accordance with aspects of the present disclosure.
FIGs. 12 and 13 show block diagrams of devices that support techniques for mobile terminated calls in non-terrestrial networks in accordance with aspects of the present disclosure.
FIG. 14 shows a block diagram of a communications manager that supports techniques for mobile terminated calls in non-terrestrial networks in accordance with aspects of the present disclosure.
FIG. 15 shows a diagram of a system including a device that supports techniques for mobile terminated calls in non-terrestrial networks in accordance with aspects of the present disclosure.
FIGs. 16 through 19 show flowcharts illustrating methods that support techniques for mobile terminated calls in non-terrestrial networks in accordance with aspects of the present disclosure.

### DETAILED DESCRIPTION

A user equipment (UE) may communicate, for example, in a non-terrestrial network (NTN), with one or more devices (e.g., a base station, a satellite, or a combination thereof). In some cases, the UE may experience a relatively poor link budget. For example, the UE may be located in location with relatively poor coverage (e.g., the UE may be remotely located or in a location with poor channel conditions such as in a backpack, in a tunnel, or the like), and may thus experience a poor connection (e.g., the UE may experience a relatively weak uplink connection). In some examples, the UE may be unable to successfully establish a connection (e.g., via a random access channel (RACH) procedure or using preconfigured uplink resources if applicable, or configured grant if applicable, or the like) with the one or more devices (e.g., the base station, the satellite, or the like) due to the relatively poor connection quality. For example, the UE may be unable to complete a RACH procedure due to a relatively poor uplink connection, even when experiencing a moderate or strong downlink connection. That is, the UE may be able to receive a message, such as a paging message, via downlink, but may be unable to transmit a response to the paging message via uplink.

Accordingly, the techniques described herein may enable devices of a wireless communications system (e.g., a non-terrestrial network (NTN)) with a delay time, a pre-paging alert, or a combination thereof. Such techniques may enable the devices to realize improved coverage and channel quality, among other advantages. For examples, the described techniques may allow a user of a UE in poor channel conditions to be alerted of the reception or incoming reception of the paging message and provide the user with time to improve the channel conditions of the UE (e.g., move the UE to a location that experiences improved signal quality).

In some examples, a network node (e.g., a wireless device such as the base station, the satellite, or the like) may identify information for transmission to the UE. The network node may transmit a paging message indicating the transmission, a pre-paging alert (e.g., a downlink alert message) indicating the subsequent transmission of a paging message, or a combination thereof. In some examples, the UE may be able to successfully receive the pre-paging alert message even in low signal-to-noise-ratio (SNR) scenarios, or in other poor connection scenarios. In some cases, the UE may be able to receive signals via a downlink connection, however, the uplink connection may be weak, and the UE may not be able to send signals via the uplink connection. The UE may identify and utilize a delay based on receiving the paging message or the pre-paging alert. The delay may be configured to provide a duration of time for the UE to be repositioned to obtain better signal strength for the uplink connection and/or the downlink connection. In some examples, the UE may be configured (e.g., via control signaling or via a pre-configuration of the UE) with a timer duration. The UE may initiate the timer in response to one or more triggers (e.g., receiving a paging message or a pre-paging alert, determining that a channel measurement such as a downlink channel measurement satisfies a threshold, and the like). Additionally or alternatively to initiating a timer, the UE may wait for input (e.g., from a user of the UE) prior to establishing a connection with the network node (e.g., the delay may be a duration between receiving a paging message or a pre-paging message and transmitting a response to the network node as part of one or more procedures to establish a connection or communicate, such as a RACH procedure, an uplink response using preconfigured uplink resources (PUR) or using a configured grant, or the like, among other examples of procedures and responses).

In some examples, the UE may indicate one or more actions to the user based on identifying the delay, initiating the timer, or combination thereof. For example, a graphical interface of the device may display a message, or a time duration, or other notification (e.g., an audible alert, a visible alert, a vibration, or the like) that the user has an incoming message or paging message. In response to the message, the user may attempt to move the UE to a location with a better signal strength. The message or other notification may additionally or alternatively indicate to the user a requested action to improve coverage (e.g., remove the UE from a backpack, walk outside of a tunnel, or the like). Accordingly, by implementing one or more delays, the UE may realize improved channel conditions and coverage (e.g., a user of the UE may move the UE to a different position during the delay to receive the message), among other advantages. Once the UE is experiencing the improved channel conditions or after the delay expires, the UE may continue with the process to establish a communication link and respond to the paging message or the pre-paging message.

In some examples, the wireless devices may identify the delay (e.g., initiate a timer and establish a connection in response to an expiration of the timer, wait for user input and establish the connection when user input is received, or other examples of delays) based on one or more thresholds. For example, the paging message (or pre-paging alert) may include an indication of a priority of the page (e.g., an indication that the paging message or information for transmission is associated with a relatively high priority). Additionally or alternatively, the pre-paging alert may be transmitted by the network node if the associated information corresponds to an emergency message for the UE, among other examples of high priority messages. In some examples, the UE may indicate a capability of the UE (e.g., a high priority paging indication flag may indicate that the UE supports the indication of the priority of the paging message) to the network node, or the high priority indication may be a common indication. In some examples, by implementing the priority techniques described herein, the system may use the alerts (e.g., notifications) for relatively high priority messages or emergency uses.

Aspects of the disclosure are initially described in the context of wireless communications systems. Aspects of the disclosure are further illustrated by and described with reference to flow diagrams, apparatus diagrams, system diagrams, and flowcharts that relate to techniques for mobile terminated calls in wireless communications systems (e.g., NTNs or other wireless communications systems such as terrestrial networks).

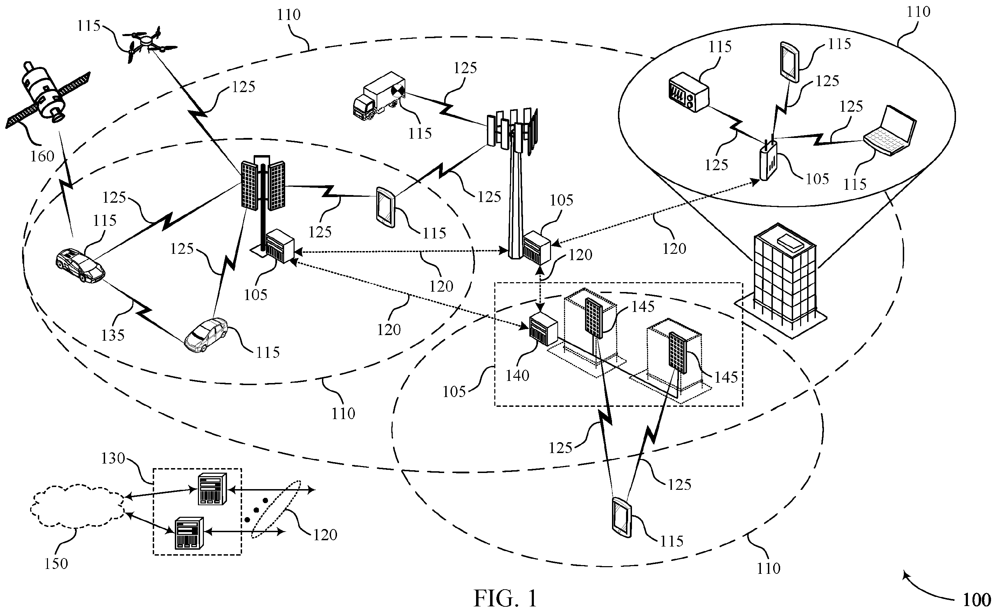

**FIG. 1** illustrates an example of a wireless communications system 100 that supports techniques for mobile terminated calls in NTNs in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

The time intervals for the base stations 105 or the UEs 115 may be expressed in multiples of a basic time unit which may, for example, refer to a sampling period of *Tₛ =* 1/(Δ*fₘₐₓ* · *N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

A base station 105 or a UE 115 may use beam sweeping techniques as part of beam forming operations. For example, a base station 105 may use multiple antennas or antenna arrays (e.g., antenna panels) to conduct beamforming operations for directional communications with a UE 115. Some signals (e.g., synchronization signals, reference signals, beam selection signals, or other control signals) may be transmitted by a base station 105 multiple times in different directions. For example, the base station 105 may transmit a signal according to different beamforming weight sets associated with different directions of transmission. Transmissions in different beam directions may be used to identify (e.g., by a transmitting device, such as a base station 105, or by a receiving device, such as a UE 115) a beam direction for later transmission or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based on a signal that was transmitted in one or more beam directions. For example, a UE 115 may receive one or more of the signals transmitted by the base station 105 in different directions and may report to the base station 105 an indication of the signal that the UE 115 received with a highest signal quality or an otherwise acceptable signal quality.

In some examples, transmissions by a device (e.g., by a base station 105 or a UE 115) may be performed using multiple beam directions, and the device may use a combination of digital precoding or radio frequency beamforming to generate a combined beam for transmission (e.g., from a base station 105 to a UE 115). The UE 115 may report feedback that indicates precoding weights for one or more beam directions, and the feedback may correspond to a configured number of beams across a system bandwidth or one or more sub-bands. The base station 105 may transmit a reference signal (e.g., a cell-specific reference signal (CRS), a channel state information reference signal (CSI-RS)), which may be precoded or unprecoded. The UE 115 may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115) or for transmitting a signal in a single direction (e.g., for transmitting data to a receiving device).

A receiving device (e.g., a UE 115) may try multiple receive configurations (e.g., directional listening) when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned in a beam direction determined based on listening according to different receive configuration directions (e.g., a beam direction determined to have a highest signal strength, highest SNR, or otherwise acceptable signal quality based on listening according to multiple beam directions).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

Wireless communications system 100 may also include one or more satellites 160. Satellite 160 may communicate with base stations 105 (also referred to as gateways in non-terrestrial networks) and UEs 115 (or other high altitude or terrestrial communication devices). Satellite 160 may be any suitable type of communication satellite configured to relay communications between different end nodes in a wireless communication system. Satellite 160 may be an example of a space satellite, a balloon, a dirigible, an airplane, a drone, an unmanned aerial vehicle, and/or the like. In some examples, the satellite 160 may be in a geosynchronous or geostationary earth orbit, a low earth orbit (LEO) or a medium earth orbit. A satellite 160 may be a multi-beam satellite configured to provide service for multiple service beam coverage areas in a predefined geographical service area. The satellite 160 may be any distance away from the surface of the earth.

In some cases, a cell may be provided or established by a satellite 160 as part of a non-terrestrial network. A satellite 160 may, in some cases, perform the functions of a base station 105, act as a bent-pipe satellite, or may act as a regenerative satellite, or a combination thereof. In other cases, satellite 160 may be an example of a smart satellite, or a satellite with intelligence. For example, a smart satellite may be configured to perform more functions than a regenerative satellite (e.g., may be configured to perform particular algorithms beyond those used in regenerative satellites, to be reprogrammed, etc.). A bent-pipe transponder or satellite may be configured to receive signals from ground stations and transmit those signals to different ground stations. In some cases, a bent-pipe transponder or satellite may amplify signals or shift from uplink frequencies to downlink frequencies. A regenerative transponder or satellite may be configured to relay signals like the bent-pipe transponder or satellite, but may also use on-board processing to perform other functions. Examples of these other functions may include demodulating a received signal, decoding a received signal, re-encoding a signal to be transmitted, or modulating the signal to be transmitted, or a combination thereof. For example, a bent-pipe satellite (e.g., satellite 160) may receive a signal from a base station 105 and may relay the signal to a UE 115 or base station 105, or vice-versa. In some examples, a base station 105, a satellite 160, or both may be examples of a network node. For example, UEs 115 may communicate with satellites 160 and/or base stations or gateways 105 using communications links 125.

In some examples, a UE 115 may receive, from a network node, a paging message indicating information for communication between the network node and the UE 115. In some other examples, the UE 115 may receive, from a network node, a downlink alert message (e.g., a pre-paging alert) indicating a paging message for subsequent transmission to the UE 115. The UE 115 may initiate a delay based on receiving the paging message (or the downlink alert message), a measurement of a communication link satisfying a threshold, or a combination thereof. The delay may be configured to allow the UE to be repositioned to achieve better signal quality and thereby enable the UE and the network node to successfully establish a communication link. The UE 115 may attempt to establish an uplink connection with the network node after an expiration of the timer. The UE 115 may communicate the information using the uplink connection. In some examples, the UE 115 may indicate one or more requested actions for a user of the UE 115 (e.g., the UE 115 may output a graphical or other notification to move to a better coverage location based on initiating the timer).

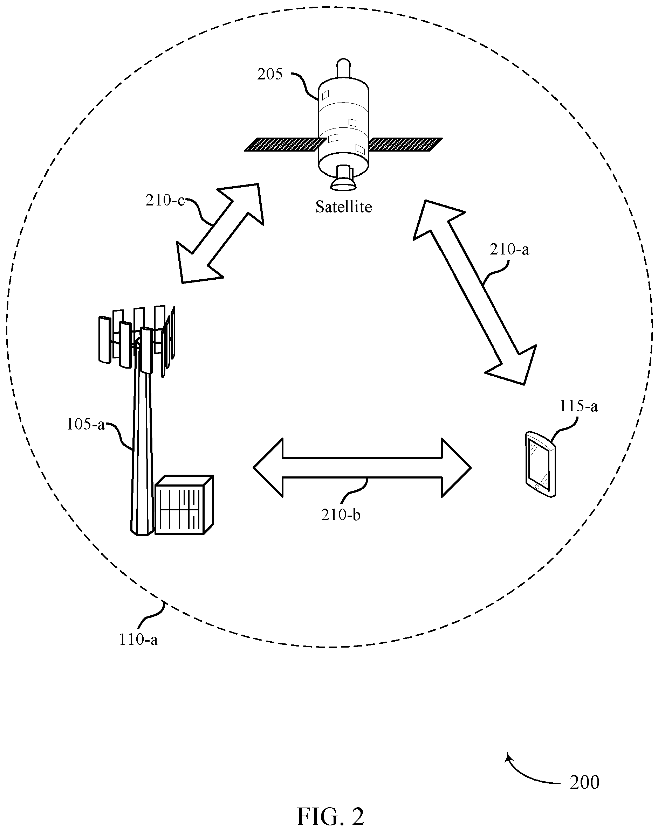

**FIG. 2** illustrates an example of a wireless communications system 200 that supports techniques for mobile terminated calls in NTNs in accordance with aspects of the present disclosure. The wireless communications system 200 may implement or be implemented by aspects of the wireless communications system 100 as described with reference to FIG. 1. For example, UE 115-a and base station 105-a may be examples of corresponding devices described with reference to FIG. 1, such as a UE 115 and a base station 105, respectively. The wireless communications system 200 may also include satellite 205, which may be an example of a satellite 160 as described herein with reference to FIG. 1. Satellite 205 may serve a coverage area 110-a in an NTN. Although shown as the UE 115-a, base station 105-a, and satellite 205 being in a same coverage area 110-a for illustrative clarity, any quantity of devices, locations of devices, and the like may be used instead (e.g., the base station 105-a may be outside the coverage area 110-a and relay signals to the UE 115-a via the satellite 205). In some examples, the base station 105-a, the satellite 205, or both may be referred to as a network node. Some operations described as being performed by a device may additionally or alternatively be performed by another device.

The wireless communications system 200 may support communications between devices UE 115-a, base station 105-a, and satellite 205. For example, UE 115-a may transmit an uplink transmission to satellite 205 via communication link 210-a. Conversely, by way of another example, satellite 205 may transmit a downlink transmission to UE 115-a via communication link 210-a. Satellite 205 may be in an orbit, such as low earth orbit (LEO), medium earth orbit (MEO), geostationary earth orbit (GEO), or other non-geostationary earth orbit. In any of these examples, satellite 205 may be at some distance from Earth (e.g., hundreds or thousands of kilometers from Earth), and therefore may be at a same or similar distance from UE 115-a, base station 105-a, or both.

In some cases, devices UE 115-a, base station 105-a, satellite 205, or any combination of these, may communicate using one or more frequency ranges. For example, such devices may communicate using frequency range 1 (FR1) (e.g., 450 MHz to 6 GHz), frequency range 2 (FR2) (e.g., 24.25 GHz to 52.6 GHz), or both.

In some cases, satellite 205 may include one or more transponders (i.e., transmitter and responder) operating as bent-pipe transponders or regenerative transponders. A bent-pipe transponder may relay incoming communications to one or more devices on Earth, or elsewhere. That is, the bent-pipe transponder may redirect communication with relatively low modification (e.g., compared to a regenerative transponder). For example, the bent-pipe transponder may re-transmit received signaling with or without signal amplification, with or without frequency changes, or with or without other signal modifications. A regenerative transponder, however, may relay incoming transmission with increased modification compared to a bent-pipe transponder. For example, the regenerative transponder may perform signal processing on received signaling before retransmitting the signaling to one or more other devices (e.g., on Earth, or elsewhere). In some cases, satellite 205 may transmit Earth-moving beams (e.g., beams that may fix on a location on Earth for a short duration, compared to Earth-fixed beams, before fixing to another location), Earth-fixed beams (e.g., beams that may be fixed on a location on Earth for a longer duration than that of Earth-moving beams), or both.

In some examples, UE 115-a, satellite 205, base station 105-a, or any combination of these, may support text messaging communications, voice call communications, eMBB communications, any other communications, or any combination of these. In some examples, UE 115-a, satellite 205, base station 105-a, or any combination of these, may support emergency communications including text, paging, voice, eMBB, any other communication, or a combination of these. In some examples, UE 115-a, satellite 205, base station 105-a, or a combination of these, may support such communications at any location on, above, or beneath the surface of the Earth.

In some examples, UE 115-a may receive one or more mobile-terminated (MT) communications, such as a paging message (e.g., via downlink on a communication link 210), from satellite 205 or base station 105-a indicating an incoming call, text message, or the like. UE 115-a may initiate an uplink procedure for UE 115-a to transition to a connected mode. For example, UE may initiate a RACH procedure (e.g. a 2-step or a 4-step RACH), or alternatively, UE may use preconfigured UL resources (e.g., PUR), resources associated with a configured grant, resources associated with early data transmission (EDT), or any combination thereof, among other examples of procedures. In some cases, UE 115-a may initiate the uplink procedure without any indication or input from a user of UE 115-a. Upon successful completion of a bearer setup for communication, which may occur after completion of the RACH procedure, UE 115-a may notify the user of the call, text message, or the like (e.g., via ringing, vibration, a notification, or the like).

In some wireless communications systems, the UE 115-a may experience issues with signal strength or signal quality. For example, a UE 115-a connected to a non-terrestrial network may experience a relatively strong downlink signal, but may experience a relatively weak uplink signal. Antenna systems in UE devices may have a limited form-factor, may be smaller, or may use less power than antenna systems associated with the network node (e.g., the satellite). In some cases, a UE 115-a may be coupled with a signal booster that may include larger antennas and additional power to help a UE 115-a establish a connection with a network node in NTNs. Such solutions may not be desirable or may not be possible. For example, if a user moves into a low-coverage area unexpectedly, the user may not have a signal booster. The techniques described herein may enable the wireless communication network to establish a connection in some scenarios.

The UE 115-a may be unable to receive the paging message or may be unable to complete the uplink procedure, and UE 115-a may thus fail to notify the user about the call, text message, or the like. For example, UE 115-a may be unable to receive the paging message due to a weak downlink (e.g., a downlink budget may have thin margins), and may be located in a backpack, a pocket, in a tunnel, or the like. In some other examples, even if the downlink connection is sufficient, UE 115-a may be unable to complete the uplink procedure due to a weak uplink (e.g., an uplink budget may be below a threshold) under similar situations. For example, UE 115-a may be unable to transmit one or more uplink transmissions as a part of the RACH procedure, such as a preamble, a scheduled transmission, some other uplink transmission, or a combination of these. That is, in some cases UE 115-a may experience an insufficient uplink budget, or an insufficient downlink budget and an insufficient uplink budget. As an example, UE 115-a may be able to receive and successfully decode a paging message due to a sufficient downlink budget, but may be unable to initiate or complete the RACH procedure due to an insufficient uplink budget. Thus, it may be beneficial to alert the user of UE 115-a about incoming MT communications or other communications (e.g., incoming emergency paging) before the RACH procedure, among other examples of techniques described herein.

In some examples, a communications module, or some other module, of UE 115-a may indicate to a user interface of UE 115-a to notify the user to take action to improve connection (e.g., by removing UE 115-a from a backpack, from a pocket, moving to a location with better coverage, moving to an open area, moving outside, exiting a tunnel, an area where a clear line of sight (LoS) may be established, or the like) upon receiving or decoding the paging message, a pre-paging alert (e.g., a downlink alert message), or a combination thereof. The notification may include an audible alert, a visible alert, a vibration, a user input prompt (e.g., to allow the user to initiate a call response procedure), a countdown timer where, after ending, UE 115-a may attempt to transmit a paging response, or perform other action to further the process of establishing a communication link between the UE 115-a and the network node. In other examples where UE 115-a may not be able to receive or successfully decode the paging message due to an insufficient downlink budget and also may not be able to initiate or complete the RACH procedure due to an insufficient uplink budget, UE 115-a may receive a pre-paging alert from satellite 205, base station 105-a, or some other network device. The pre-paging alert may indicate to the user interface of UE 115-a to notify the user to take action to improve connection (e.g., using similar notification techniques as discussed previously).

In some cases, satellite 205, base station 105-a, or some other network device, may first transmit one or more paging messages, and upon determining that the one or more paging messages have not been received, decoded, or both by UE 115-a, may additionally transmit one or more pre-paging alerts to UE 115-a. In some other cases, satellite 205, base station 105-a, or some other network device may instead first transmit one or more pre-paging alerts to UE 115-a. Transmitting the paging message first or the pre-paging message first may depend on previously received capability reporting from UE 115-a indicating an ability or inability for UE 115-a to successfully receive the pre-paging alert. Additionally or alternatively, a network node may attempt to transmit a paging message a threshold quantity of times and determine that channel conditions at the UE 115-a fail to satisfy a threshold (e.g., the UE 115-a is unable to receive or respond to the paging message). In such examples, the network node may transmit a pre-paging alert based on the threshold. By receiving the paging message or the pre-paging message and implementing a delay as described herein, the user of UE 115-a may have knowledge of an incoming message (e.g., emergency or high priority message) and may be able to transition UE 115-a from an insufficient link budget scenario to a sufficient link budget scenario.

In some examples, UE 115-a may take one or more reference signal received power (RSRP) signal measurements, or other measurements (e.g., while engaging in active communication, or upon receive a paging message or a pre-paging alert), to determine a signal quality, signal strength, or the like. If the RSRP measurement value is below a threshold value, an interface on UE 115-a may indicate to the user of UE 115-a to take action to move UE 115-a to a position with better coverage or connection. Such an indication may include an audible alert, a visible alert, a vibration, the like, or any combination of these.

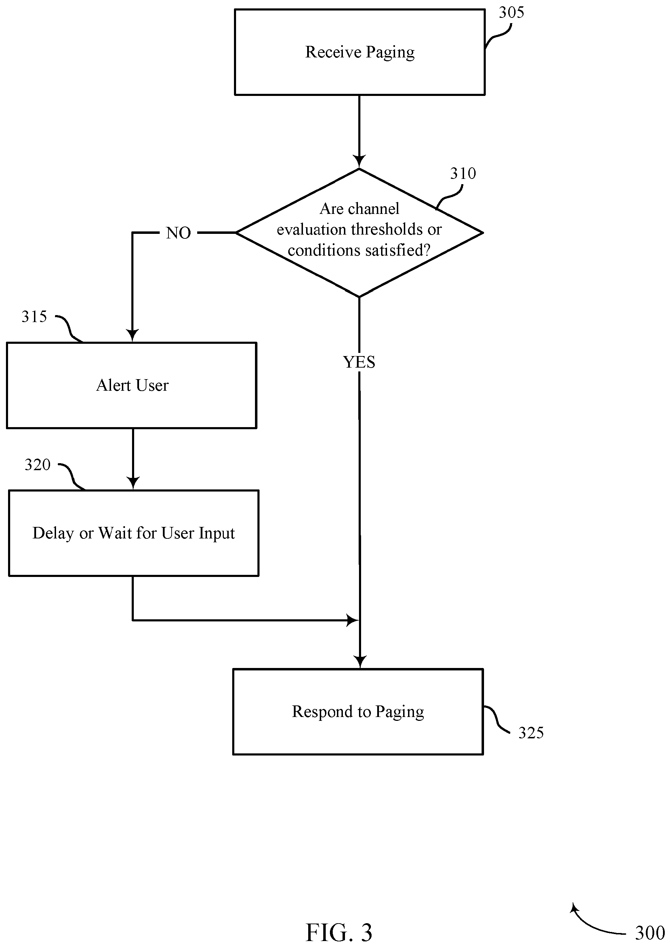

**FIG. 3** illustrates an example of a flow diagram 300 that supports techniques for mobile terminated calls in NTNs in accordance with aspects of the present disclosure. The flow diagram 300 may implement or be implemented by aspects of the wireless communications system 100, wireless communications system 200, or both, as described with reference to FIG. 1 and FIG. 2. For example, the flow diagram 300 may illustrate a UE receiving a paging message and, in some examples, implementing a delay, alerting a user with one or more requested actions, etc., as described herein.

At 305, the UE may receive paging from a network node (e.g., a base station or a satellite, or some other device in a network). For example, the UE may receive a paging message via a downlink connection from the network node. In some examples, the paging message may include a paging record for the UE ID, indicating the UE is to receive incoming communications (e.g., communications such as a text message, a phone call, or the like, among other examples of communications). For example, the paging message may indicate that the network node has information for subsequent transmission to the UE (e.g., high priority information or other information).

In some examples, the UE may determine whether one or more thresholds or conditions are satisfied. For example, at 310 the UE may whether one or more channel evaluation thresholds or one or more channel conditions are satisfied. In some examples, the UE may determine whether a downlink condition satisfies a threshold (i.e., the UE may determine whether a downlink condition is relatively good). In some examples, the UE may determine or estimate the uplink channel conditions based on evaluating the downlink channel conditions (e.g., comparing a downlink measurement to a threshold). In some examples, the UE may take other factors into consideration, such as uplink transmit power or antenna configuration or the like, in making the determination or estimation of the uplink channel condition. As an illustrative example, the UE may evaluate a current RSRP of a connection with the network node, or other channel conditions, based on reception and decoding of the paging message. The UE may compare the RSRP or other measurement to the threshold. In some examples, the threshold may be configured via control signaling (e.g., RRC signaling may indicate the threshold, and such indication may be via dedicated RRC signaling or broadcast signaling by using SIB). Additionally or alternatively, the threshold may be pre-configured at the UE. In some examples, the threshold may be an example of a variable (e.g., *q-RxLevMin*)*.* For instance, the UE may reuse the variable for the threshold. In some such examples, the UE may identify an offset for the variable (e.g., the UE may be configured or pre-configured with an adjustment parameter to use a modified value of the variable as a threshold). The UE may determine that a measurement or other channel conditions satisfy the threshold and proceed to 325, or the UE may determine that the measurement or other channel conditions fail to satisfy the threshold and proceed to 315.

At 315, the UE may alert a user, for example, using an audible alert, a visible alert, a vibration, and the like. In some examples, the UE may alert the user based on the one or more measurements or channel conditions failing to satisfy the threshold. In some examples, alerting the user may include providing a notification (e.g., a graphical output, a vibration, a sound, etc.) to the user requesting one or more actions (e.g., the UE may request that the user move to an area with better connection or less blockages to improve channel conditions in order to respond to paging or initiate a call). In some examples, the alert (e.g., indication) may include an indication of the delay (e.g., the indication may include an automatic count down timer after which the UE would start a paging response). Additionally or alternatively, the interface of the UE may allow the user to initiate the call response procedure.

At 320, the UE may identify a delay. For example, the UE may initiate a timer with a duration of the delay. Additionally or alternatively, the UE may wait for user input before proceeding to 325 or cancelling operations (e.g., the UE may proceed if the user presses a button acknowledging that the one or more actions were completed or if the timer expires, the UE may drop communications if the user does not acknowledge the alert, or any combination thereof). In some examples, a first layer of the UE (e.g., an RRC layer) may indicate relatively quickly to a second layer of the UE (e.g., a NAS layer) about the reception of the paging, and the second layer may instruct the first layer to resume after the delay (e.g., the RRC may perform RRC connection request/resume after an expiration of the timer or user input or both). In some other examples, the first layer may refrain from notifying the second layer about the reception of the paging until an expiration of the delay or an action from the user.

At 325, the UE may response to the paging. For example, the UE may proceed to transmit a paging response (e.g. via initiating a RACH procedure or using preconfigured UL resources, using configured grant, or the like) to establish a connection with the network node and transmit or receive communications via the connection.

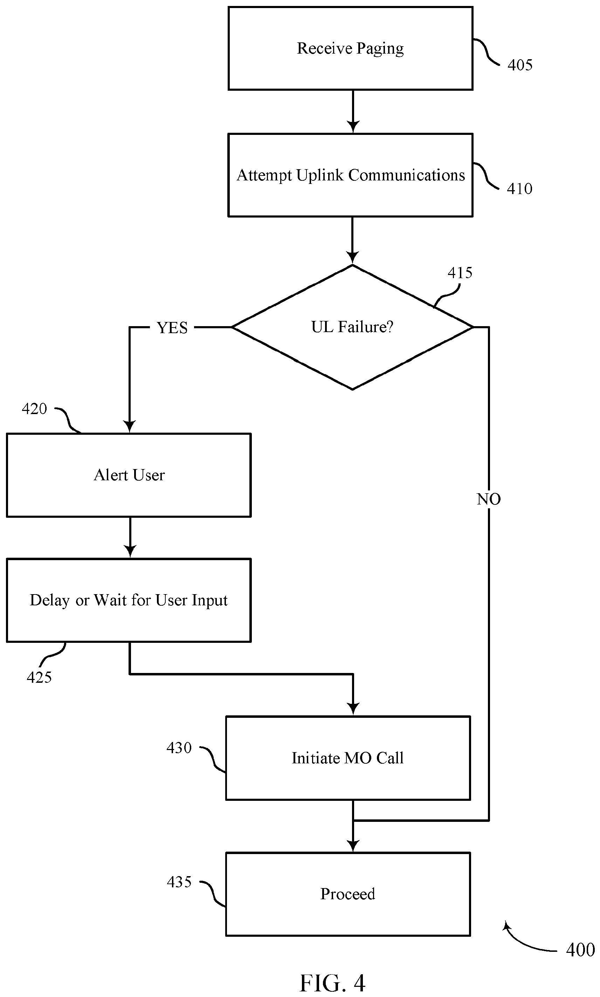

**FIG. 4** illustrates an example of a flow diagram 400 that supports techniques for mobile terminated calls in NTNs in accordance with aspects of the present disclosure. The flow diagram 400 may implement or be implemented by aspects of the wireless communications system 100, wireless communications system 200, or both, as described with reference to FIG. 1 and FIG. 2. The flow diagram 400 may illustrate a UE receiving a paging message and alerting a user if a connection or coverage is poor.

At 405, the UE may receive paging from a network node (e.g., a base station or a satellite, or some other device in a network). For example, the UE may receive a paging message via a downlink connection from the network node. In some examples, the paging message may include a paging record for the UE ID, indicating the UE is to receive incoming communications (e.g., communications such as a text message, a phone call, or the like, among other examples of communications). For example, the paging message may indicate that the network node has information for subsequent transmission to the UE (e.g., high priority information or other information).

At 410, the UE may attempt uplink communications. For example, the UE may initiate a RACH procedure upon successfully receiving and decoding the paging message, among other examples of uplink responses to the paging message (e.g., the UE may transmit an uplink response using resources associated with PUR, EDT, a configured grant, and the like as described herein). The UE may attempt to transmit signaling, such as a paging response, via uplink to the network node (e.g., a satellite, a base station or other wireless device in a cell on which the UE may be camping, or the like).

At 415, the UE may determine whether an uplink failure is detected. For example, the UE may not be able to successfully transmit via uplink as a part of the RACH procedure, and thus may not be able to complete the RACH procedure. In such examples, the UE may detect an uplink failure. In some examples, the UE may transmit a paging response at 410 and fail to receive an expected response from the base station. The UE may determine that an uplink failure has occurred based on failing to receive the response. In some examples, an attempt counter may be configured (e.g., indicated via control signaling) or pre-configured at the UE. In such examples, the UE may attempt uplink transmission (e.g., repeat 410) until a quantity of attempts satisfies a threshold configured or pre-configured at the UE. The UE may proceed to 420 based on the satisfied threshold. Alternatively, the UE may receive a response and determine that the uplink transmission was successful, and the UE may proceed to 435.

At 420, the UE may alert the user (e.g., via a vibration, an audio indication, a visual indication, the like, or a combination), and may indicate to the user to move the UE to a location that may have better signal connection or coverage, among other examples of requested actions. In some examples, the UE may alert the user as described herein with reference to FIG. 3.

At 425, the UE may delay or wait for user input. For example, the UE may delay for a duration to allow enough time for the user to move the UE to a location that may have better signal connection or coverage. Additionally or alternatively, the UE may wait for user input on a user interface. The input may indicate that the UE may be located in an area with better signal connection or coverage. In some examples, the UE may delay or wait for user input as described herein with reference to FIG. 3.

At 430, the UE may attempt to reinitiate a mobile-originated (MO) communication (e.g., a text, a call, the like, or a combination). For example, the UE may attempt another RACH procedure, a NAS service request attempt, or any other attempt involving an uplink transmission for the MO communication. The UE may be able to successfully set up the MO communication due to implementing the delay (e.g., the user may move the UE to a location or area with better signal connection or coverage). At 435, the UE may proceed with communications. For example, the UE may proceed with the initiated MO call. Additionally or alternatively, the UE may proceed with the MT call (e.g., if the UE determines that uplink conditions satisfy a threshold at 415 the UE may transmit a paging response at 435).

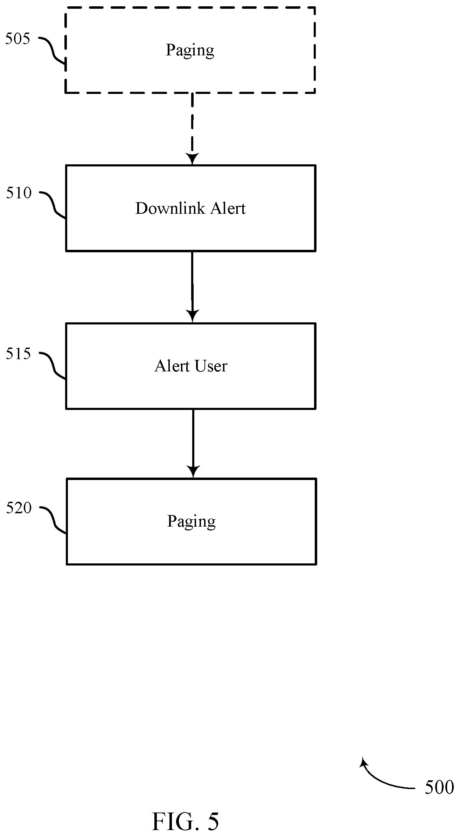

**FIG. 5** illustrates an example of a flow diagram 500 that supports techniques for mobile terminated calls in NTNs in accordance with aspects of the present disclosure. The flow diagram 500 may implement or be implemented by aspects of the wireless communications system 100, wireless communications system 200, or both, as described with reference to FIG. 1 and FIG. 2. The flow diagram 500 may illustrate a UE receiving a pre-paging alert from a network node.

In some examples, a UE may experience one or more weak connections (e.g., downlink and uplink), and may be both unable to receive a paging message, transmit via uplink to complete a paging response procedure (e.g., a RACH procedure or procedure as described herein) as part of establishing a connection (e.g., to receive a call, a text message, an emergency message, the like, or a combination of these), or both. A network device (e.g., a network node) may transmit a pre-paging alert to the UE, for example, to proactively alert the UE regarding an upcoming paging message. The UE may be able to successfully receive the pre-paging alert even at a relatively low SNR (e.g., -20 decibels (dB)), which may enable the UE to implement one or more techniques to improve coverage and reception of the paging message indicated by the pre-paging alert.

In some examples, at 505 the network node may transmit the paging message to the UE. The UE may be unable to receive the paging message (e.g., due to a weak downlink connection as a result of the UE location in an area of poor coverage), and the network node may thus not receive a response from the UE.

At 510, the network node may transmit the pre-paging alert, which may be referred to as a downlink alert or a downlink alert message, to the UE. In some examples, the network node may attempt a paging message one or more times and transmit the pre-paging alert based on the quantity of attempts satisfying a configured threshold. In some other examples, the network node may begin communications with the downlink alert (e.g., the network node may determine that channel conditions are relatively poor and transmit the pre-paging alert based on the determination).

In some examples, one or more network nodes may transmit multiple pre-paging alert sequences to one or more UEs at low SNRs. In some cases, a network node may assign a same sequence to a group of multiple UEs. For example, the network node may serve a relatively large number of UEs and may assign the same sequence to a subset or group of the UEs to accommodate the relatively large number of UEs. In some such examples, the group size may be relatively small, for example, to reduce a probability of false alarms at one or more UEs of the group of UEs, although any size of groups may be used. In some cases, each UE may monitor for one or more sequences of the multiple sequences (e.g., monitor for or find a primary synchronization signal (PSS), a secondary synchronization signal (SSS), or both). In some cases, the UE may search for a signal including a sequence directly instead of monitoring for or finding a PSS or an SSS, and the signal including the sequence may be able to operate at lower SNRs than that of other synchronization signals. In some examples, each sequence of the multiple sequences may map to one or more UE IDs, and each UE may monitor for a sequence corresponding to each respective UE ID (e.g., a UE may monitor for a pre-paging alert sequence corresponding to the UE based on the ID). Additionally or alternatively, the one or more network nodes, or any other network node, may configure one or more of the multiple pre-paging alert sequences to map the sequences to the respective one or more UEs. One or more of the network nodes may configure the sequences via RRC signaling, a MAC control element (MAC-CE), a downlink control information (DCI) message, or the like. Additionally or alternatively, one or more other network nodes, the UE, or any combination of these devices, may negotiate one or more UE IDs over a NAS to map UE IDs to the pre-paging alert sequences. In some cases, such mapping of UE-specific sequences may depend on a temporary user identifier (e.g., a 5G serving temporary mobile subscriber identity (S-TMSI), an inactive radio network temporary identity (I-RNTI), or the like) to enhance security of the mapping. That is, UEs may temporarily correspond to such temporary user identifiers to facilitate mapping of the pre-paging alert sequences.

In some other examples, the pre-paging alert may be similar to a paging message, but transmitted with higher quantity of repetitions. In some cases, UEs may have UE IDs and may receive pre-paging alerts mapping to each UE ID. One or more other network nodes, the UEs, or any combination of these devices, may negotiate the UE IDs over a NAS to map the UE IDs to the pre-paging alerts. In some cases, the UEs may have temporary user identifiers (e.g., 5G S-TMSIs, I-RNTIs, or the like) to enhance security of the mapping. Additionally or alternatively, each pre-paging alerts may include one or more message authentication codes for integrity (MAC-I) (e.g., an 8-bit MAC-I, a 16-bit MAC-I, or some other MAC-I size) to protect the integrity of the pre-paging alert mapping.

At 515, the UE may alert a user as described herein. For example, the UE may alert the user of the UE to move the UE to an area of better coverage or other requested actions. In some examples, the alert may be an example of a vibration, audio indication, visual indication, the like, or a combination of these. Thus, upon decoding the pre-paging alert, the UE may be able to improve coverage or channel conditions.

At 520, the network node may transmit a paging message immediately or after a delay, and the UE may be able to successfully communicate with the network node. In some examples, the network node may retransmit the paging message (e.g., if the network node transmits the paging message at 505). In some other examples, the network node may expect a MO session from the UE. That is, the network node may expect the UE to initiate communication with the network after moving to the area with better signal connection or coverage.

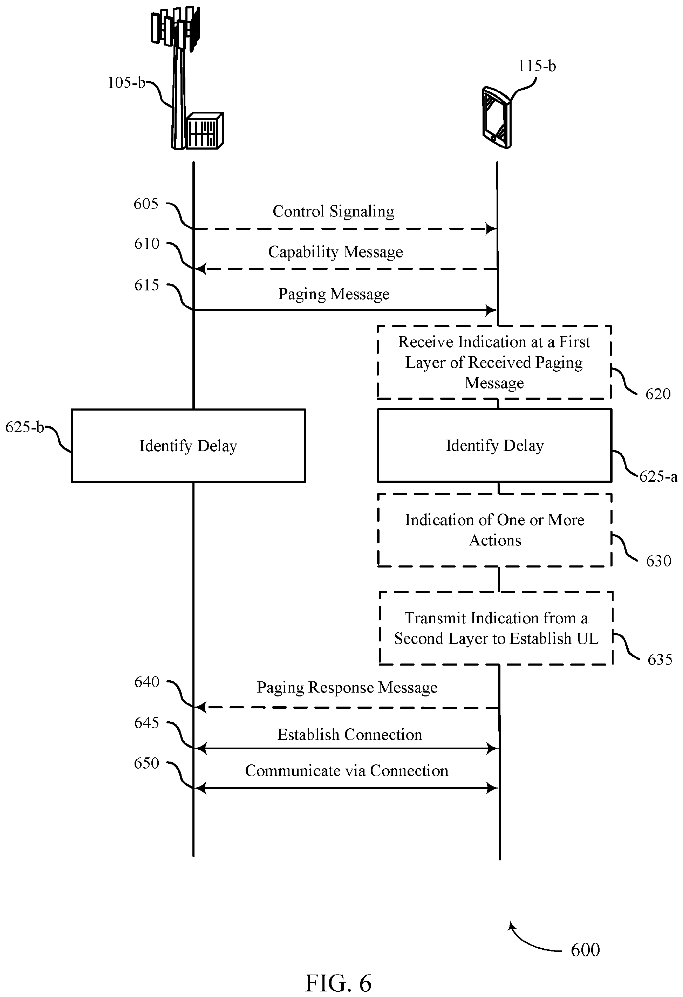

**FIG. 6** illustrates an example of a process flow 600 that supports techniques for mobile terminated calls in NTNs in accordance with aspects of the present disclosure. The process flow 600 may implement aspects of the wireless communications system 100, wireless communications system 200, or both, or may be implemented by aspects of the wireless communications system 100, wireless communications system 200, or both, as described with reference to FIG. 1 and FIG. 2. In some examples, the process flow 600 may include example operations associated with one or more of UE 115-b and base station 105-b, which may be examples of corresponding devices described with reference to FIGs. 1 and 2. In the following description of the process flow 600, the operations between UE 115-b and base station 105-b may be performed in a different order than the example order shown, or the operations performed by the UE 115-b and base station 105-b may be performed in different orders or at different times. Some operations may also be omitted from the process flow 600, and other operations may be added to the process flow 600.

In some examples, at 605 base station 105-b may transmit control signaling to UE 115-b. The control signaling may configure the UE 115-b with one or more parameters. For example, the control signaling may indicate a delay (e.g., a duration of a timer), one or more thresholds (e.g., attempt counter thresholds, measurement thresholds or offsets, and the like), or a combination thereof. Additionally or alternatively, the one or more parameters may be pre-configured at the devices. In some cases, the control signaling may include RRC signaling, signaling of a MAC-CE, a system information block (SIB) broadcast, signaling of a DCI, or any combination of these.

In some examples, at 610 UE 115-b may transmit a capability message to a network node (e.g., base station 105-b). The capability message may indicate capability of UE 115-b to receive a pre-paging alert, capability of UE 115-b to receive a high priority flag for a paging message, or both. In some cases, UE 115-b may transmit each capability indication on separate messages or on the same message.

At 615, UE 115-b may receive, from a network node such as base station 105-b, a paging message indicating information for communication between the network node and UE 115-b. In some examples, the paging message may include an indication of a priority of the information (e.g., a priority flag). The paging message may include a paging record for the UE ID.

In some examples, at 620, UE 115-b may receive, at a first layer of UE 115-b, an indication of the received paging message from a second layer, where establishing an uplink connection, identifying a delay, or both may be based on the indication of the received paging message. Such layers and communications may be examples of layers as described with reference to FIG. 3. For example, a first layer (e.g., an RRC layer) may indicate relatively quickly to a second layer (e.g., a NAS layer) about the reception of the paging, and the second layer may instruct the first layer to resume after the delay (e.g., the RRC may perform RRC connection request/resume after an expiration of the timer or user input or both). In some other examples, the first layer may refrain from notifying the second layer about the reception of the paging until an expiration of the delay.

At 625, UE 115-b, base station 105-b, or both may identify a delay. For example, UE 115-b (or base station 105-b) may initiate a timer or wait for user input as described herein. Thus, UE 115-b may delay for a duration after receiving the paging message before transmitting an uplink response (e.g., a paging response message at 635), for example, to allow sufficient time for a user of UE 115-b to move to an area with better connection or coverage. In some cases, a network node such as base station 105-b may indicate to another UE about the delay, a duration of the delay, etc. For example, the other UE (not shown) may be a UE associated with a different user (e.g., a caller attempting to communicate the user of the UE 115-b). The different user may be connected to a same or different network. As an illustrative example, the network node may transmit a message to the other UE indicating that the user of the other UE may expect to wait the delay duration before being able to contact the user of UE 115-b. The delay duration may be indicated by or inferred from the paging message or an indication included in the paging message. The delay duration may be a fixed or a configurable parameter, and the network node such as base station 105-b may configure the parameter (e.g., configured via an SIB broadcast, dedicated RRC signaling, a MAC-CE, a DCI, or the like) for UE 115-b.

In some cases, whether the delay duration is fixed or configurable may be configured by communications from one or more network nodes over a NAS, or over a different communication protocol. In some other cases, configuring the parameter, signaling the parameter, or the like may be performed by the one or more network nodes over the NAS, or over a different communication protocol. In some cases, depending on the value of the duration (e.g., if the duration is sufficiently long in time, whether the parameter is fixed or SIB-broadcasted, or for some other reason), an interface at UE 115-b may start and display or otherwise indicate a countdown timer (e.g., which may include durations of seconds, tens of seconds, minutes, hours, or any other range of time) upon receiving the paging message. Upon conclusion of the countdown timer, a communication module, or some other module, at UE 115-b may initiate a RACH procedure, transmit a paging response message, or initiate some other uplink procedure, or a combination of these. In some cases, the countdown timer may be automatically stopped (e.g., based on a coverage threshold being satisfied), or may be indicated to stop (e.g., via signaling based on the coverage threshold being satisfied, or based on input from the user), for example, if the user of UE 115-b takes action to move UE 115-b to a location having better connection or coverage. In some examples, other timers may be configured to implement the delay. For example, one or more devices may extend one or more core network (CN) timers to accommodate the delay duration (e.g., delay in transmitting the paging response). For example, a timer started (e.g., timer T3517) upon transmission of a message (e.g., a service request message) may be extended in duration (e.g., from 15 seconds to 1 minute, or any other extended duration of time). Additionally or alternatively, new timers may be used for the scenarios described herein.

In some examples, paging messages (e.g., for an MT call or session) may indicate a priority. For example, the paging message may indicate that the information associated with the paging message is high priority (e.g., via a high priority paging indication flag). In some cases, the CN may indicate to a radio access network (RAN) to include the high priority flag or to not include the high priority flag in the paging message (e.g., based on a capability of the UE 115-b). Upon receiving the paging message including the high priority paging indication flag, UE 115-b may alert the user of UE 115-b to move to a location for improved coverage or connection. In some other examples, UE 115-b may refrain from alerting the user of UE 115-b based on determining that the paging message does not include the high priority paging indication flag. In some cases, UE 115-b may indicate support of the high priority paging indication flag in UE capability reporting (e.g., in the capability message or in a separate message at 610).

In some cases, the high priority paging indication flag may be a UE-specific indication. For example, a paging record for UE 115-b may include the high priority paging indication flag or an indication of the flag such that UE 115-b may receive or take action upon receiving the flag such that any false alarms of high priority paging indications to other UEs 115 may be reduced. Additionally or alternatively, the high priority paging indication flag may be a common indication included in the paging message, and may be applicable to multiple or all UEs 115 that may receive the paging message (e.g., an earthquake and tsunami warning system (ETWS), a commercial mobile alert system (CMAS), or the like, or any combination of these).

In some examples of implementing the delay, UE 115-b may determine a duration of the timer based on a configuration of UE 115-b, a measurement of the communication link, or a combination thereof, as described with reference to FIG. 3. For example, UE 115-b may initiate the timer based on receiving the paging message and a measurement of a communication link satisfying a threshold (e.g., detecting an uplink failure). As an illustrative example, UE 115-b may determine the measurement of the communication link based on receiving the paging message, the measurement indicating one or more channel conditions. UE 115-b may compare the measurement with the threshold to determine whether the UE may be in an area with good coverage or connection, where the threshold may be indicated via control signaling or a configuration of UE 115-b. UE 115-b may determine that the measurement satisfies the threshold based on the comparing, where initiating the timer may be based on determining that the measurement satisfies the threshold. In some examples, the measurement may include an RSRP measurement, a received signal strength indicator (RSSI) measurement, an SNR measurement, or any combination of these. The measurement (e.g., RSRP measurement, RSSI measurement, SNR measurement, or any combination of these) may be fixed, or may be configurable by a network node such as base station 105-b (e.g., via SIB broadcast, dedicating RRC signaling or a MAC-CE, or NAS signaling). In some cases, initiating the timer may be based on a priority of information for communication between a network node such as base station 105-b and UE 115-b satisfying a priority threshold.

At 630, UE 115-b may output one or more indications of one or more requested actions (e.g., actions to improve link performance) based on identifying the delay, where establishing the uplink connection may be based on the one or more requested actions. The indications may be an example of alerting a user as described herein with reference to FIG. 3.

In some examples, at 635, UE 115-b may transmit, from the second layer in response to receiving the indication, an indication to establish the uplink connection in response to the expiration of the delay (e.g., an expiration of the timer or based on receiving user input). At 640, UE 115-b may transmit a paging response message based on the paging message and the expiration of the timer. The paging response message may help establish an uplink connection, and may be part of a RACH procedure. In some examples, the UE 115-b may transmit the paging response based on the indication from the second layer. At 645, UE 115-b may establish an uplink connection with base station 105-b based on the expiration of the delay, or base station 105-b may establish a downlink connection with UE 115-b based on transmitting the downlink alert message and an expiration of the timer. In some cases, UE 115-b may establish the uplink connection based on the received indication of the received paging message from the second layer. In some examples, UE 115-b may initiate an MO message based on the expiration of the timer. At 650, UE 115-b and base station 105-b may communicate information using the uplink connection, the downlink connection, or both.

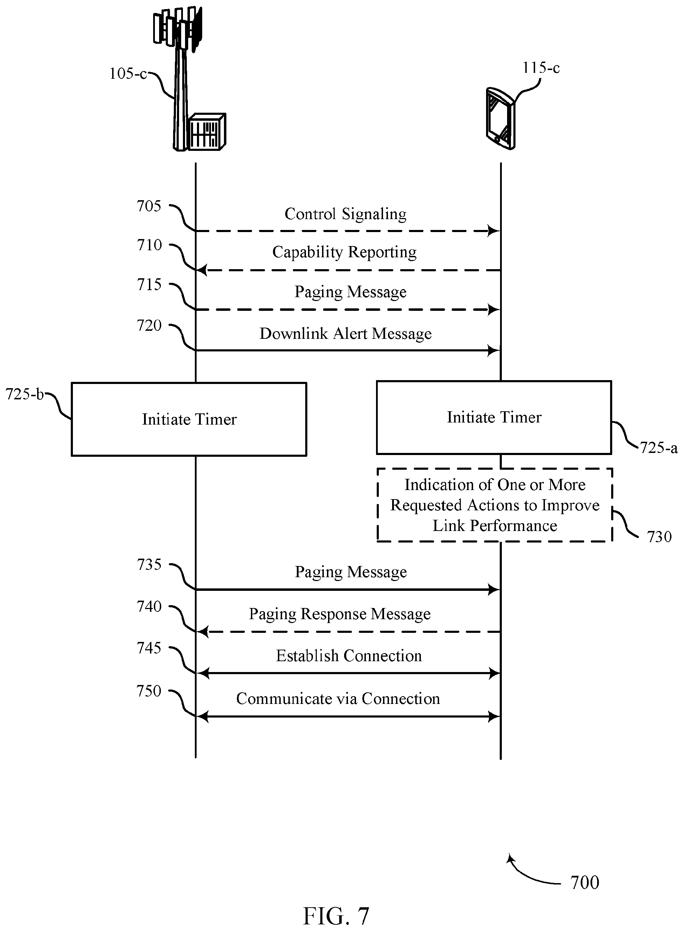

**FIG.** 7 illustrates an example of a process flow 700 that supports techniques for mobile terminated calls in NTNs in accordance with aspects of the present disclosure. The process flow 700 may implement aspects of the wireless communications system 100, wireless communications system 200, or both, or may be implemented by aspects of the wireless communications system 100, wireless communications system 200, or both, as described with reference to FIG. 1 and FIG. 2. In some examples, the process flow 700 may include example operations associated with one or more of UE 115-c and base station 105-c, which may be examples of corresponding devices described with reference to FIGs. 1 and 2. In the following description of the process flow 700, the operations between UE 115-c and base station 105-c may be performed in a different order than the example order shown, or the operations performed by the UE 115-c and base station 105-c may be performed in different orders or at different times. Some operations may also be omitted from the process flow 700, and other operations may be added to the process flow 700.

At 705, UE 115-c may receive control signaling indicating a duration of a timer, where the control signaling may include RRC signaling, signaling for a MAC-CE, an SIB broadcast, or any combination of these.

At 710, UE 115-c may transmit a capability message to a network node (e.g., base station 105-c). The capability message may indicate capability of UE 115-c to receive a pre-paging alert (e.g., a downlink alert message), capability of UE 115-c to receive a high priority flag for a paging message, or both. In some cases, UE 115-c may transmit each capability indication on separate messages or on the same message.

At 715, UE 115-c may receive, from a network node such as base station 105-c, a paging message indicating information for communication between the network node and UE 115-c. Receiving the paging message may include receiving an indication of a priority of the information. Receiving the paging message may include one or more similar aspects described at least 615 of FIG. 6.

At 720, UE 115-c may receive the downlink alert message indicating a paging message for subsequent transmission to UE 115-c, for example, at 735. In some examples, information to be communicated may be associated with a priority that satisfies a priority threshold, and receiving the downlink alert message may be based on the information being associated with the priority that satisfies the priority threshold. That is, in some examples, base station 105-c may transmit the downlink alert message for emergency use (e.g., exclusively for emergency use), where the priority threshold may be an emergency use threshold. When base station 105-c may be initiating transmission of the paging message for an MT call or session, a CN may indicate to a RAN whether to transmit the pre-paging alert (e.g., depending on an emergency status). In some cases, UE 115-c may receive a sequence associated with the downlink alert message, where the sequence corresponds to an identifier of UE 115-c, the sequence is configured by UE 115-c or some other network node via control signaling, the sequence corresponds to a group of UEs including UE 115-c, or any combination of these.

At 725, UE 115-c, base station 105-c, or both, may identify a delay based on receiving the downlink alert message. In some examples, the devices may initiate a timer with a duration (e.g., the delay may be the duration of the timer). Additionally or alternatively, the devices may wait for user input as described herein (e.g., the delay may be a duration between alerting a user and receiving user input). In some examples, a network node, such as base station 105-c, may delay for a duration (e.g., the timer duration) after receiving the downlink alert message before transmitting downlink paging (e.g., the paging message at 735) to allow sufficient time for a user of UE 115-c, for example, to move to an area with better connection or coverage. The delay duration may be fixed or configurable, and the network node such as base station 105-c may configure the duration (e.g., configured via an SIB broadcast, dedicated RRC signaling, a MAC-CE, or the like). In some cases, whether the delay duration is fixed or configurable may be configured by communications from one or more network nodes over a NAS, or over a different communication protocol.

In some other cases, configuring the duration, signaling the duration, or the like may be performed by the one or more network nodes over the NAS, or over a different communication protocol. In some cases, depending on the value of the duration (e.g., if the duration is sufficiently long in time, whether the duration is fixed or SIB-broadcasted, or for some other reason), an interface at UE 115-c may start and display or otherwise indicate a countdown timer (e.g., the timer at 725-a, which may include durations of seconds, tens of seconds, minutes, hours, or any other range of time) upon receiving the downlink alert message. Upon conclusion of the countdown timer, a network node such as base station 105-c may transmit (e.g., retransmit) a paging message at 735. In some cases, the countdown timer may be automatically stopped (e.g., based on a coverage threshold being satisfied), or may be indicated to stop (e.g., via signaling based on the coverage threshold being satisfied, or manually by the user), if the user of UE 115-c takes action to move UE 115-c to a location having better connection or coverage. In some examples, due to the delay duration, one or more devices may extend one or more core network (CN) timers to accommodate the delay duration. For example, a timer started (e.g., timer T3517) upon transmission of a message (e.g., a service request message) may be extended in duration (e.g., from 15 seconds to 1 minute, or any other extended duration of time).

Additionally or alternatively, upon reception of the downlink alert message (e.g., pre-paging alert), UE 115-c may initiate a MO session, or after the duration of the delay (e.g., the delay indicated by the timer or a delay before receiving user input). A user of UE 115-c may move to a location having better coverage or connection and may initiate the MO session, among other examples of actions to improve coverage. In some cases, the downlink alert message may include an indication of a voice call which may be used to determine how many MO session initiation attempts to make before a CN transmits an indication (e.g., an indication of "no answer") to another device, such as another UE 115, which may be attempting to contact UE 115-c.

At 730, UE 115-c may output one or more indications of one or more requested actions to improve link performance based on initiating the timer, where establishing the uplink connection may be based on the one or more requested actions.

At 735, UE 115-c may receive another paging message from base station 105-c (e.g., retransmitted by base station 105-c). In some cases, UE 115-c may receive the paging message based on the downlink alert message. In some cases, UE 115-c may receive the paging message upon expiration of the timer at 725. In some cases, UE 115-c may receive the paging message depending on the quality of coverage or connection experienced at a new location that UE 115-c may be located at.

At 740, UE 115-c may transmit a paging response message based on receiving the paging message. The paging response message may help establish an uplink connection, and may be part of a RACH procedure.

At 745, UE 115-c may establish an uplink connection with a network node such as base station 105-c based on receiving the downlink alert message and an expiration of the timer, or base station 105-b may establish a downlink connection with UE 115-b based on transmitting the downlink alert message and an expiration of the timer. In some cases, establishing the uplink connection may be based on the paging response message. In some cases, UE 115-c may initiate a MO message based on the expiration of the timer.

At 750, UE 115-c and base station 105-c may communicate information using the established uplink connection, the established downlink connection, or both.

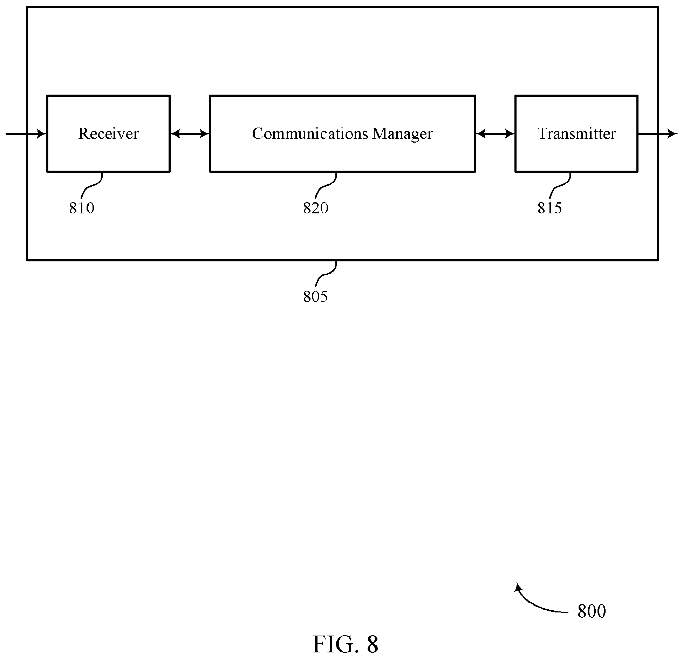

**FIG. 8** shows a block diagram 800 of a device 805 that supports techniques for mobile terminated calls in non-terrestrial networks in accordance with aspects of the present disclosure. The device 805 may be an example of aspects of a UE 115 as described herein. The device 805 may include a receiver 810, a transmitter 815, and a communications manager 820. The device 805 may also include a processor. Each of these components may be in communication with one another (e.g., via one or more buses).

The receiver 810 may provide a means for receiving information such as packets, user data, control information, or any combination thereof associated with various information channels (e.g., control channels, data channels, information channels related to techniques for mobile terminated calls in non-terrestrial networks). Information may be passed on to other components of the device 805. The receiver 810 may utilize a single antenna or a set of multiple antennas.

The transmitter 815 may provide a means for transmitting signals generated by other components of the device 805. For example, the transmitter 815 may transmit information such as packets, user data, control information, or any combination thereof associated with various information channels (e.g., control channels, data channels, information channels related to techniques for mobile terminated calls in non-terrestrial networks). In some examples, the transmitter 815 may be co-located with a receiver 810 in a transceiver module. The transmitter 815 may utilize a single antenna or a set of multiple antennas.

The communications manager 820, the receiver 810, the transmitter 815, or various combinations thereof or various components thereof may be examples of means for performing various aspects of techniques for mobile terminated calls in non-terrestrial networks as described herein. For example, the communications manager 820, the receiver 810, the transmitter 815, or various combinations or components thereof may support a method for performing one or more of the functions described herein.

In some examples, the communications manager 820, the receiver 810, the transmitter 815, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 820, the receiver 810, the transmitter 815, or various combinations or components thereof may be implemented in code (e.g., as communications management software or firmware) executed by a processor. If implemented in code executed by a processor, the functions of the communications manager 820, the receiver 810, the transmitter 815, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some examples, the communications manager 820 may be configured to perform various operations (e.g., receiving, monitoring, transmitting) using or otherwise in cooperation with the receiver 810, the transmitter 815, or both. For example, the communications manager 820 may receive information from the receiver 810, send information to the transmitter 815, or be integrated in combination with the receiver 810, the transmitter 815, or both to receive information, transmit information, or perform various other operations as described herein.

The communications manager 820 may support wireless communications at a UE in accordance with examples as disclosed herein. For example, the communications manager 820 may be configured as or otherwise support a means for receiving, from a network node, a paging message indicating information for communication between the network node and the UE. The communications manager 820 may be configured as or otherwise support a means for identifying a delay based on receiving the paging message, a condition of a communication link satisfying a threshold, or a combination thereof. The communications manager 820 may be configured as or otherwise support a means for establishing an uplink connection with the network node based on an expiration of the delay. The communications manager 820 may be configured as or otherwise support a means for communicating the information using the uplink connection.

Additionally or alternatively, the communications manager 820 may support wireless communications at a UE in accordance with examples as disclosed herein. For example, the communications manager 820 may be configured as or otherwise support a means for receiving, from a network node, a downlink alert message indicating a subsequent transmission of a paging message to the UE. The communications manager 820 may be configured as or otherwise support a means for identifying, at the UE, a delay based on receiving the downlink alert message. The communications manager 820 may be configured as or otherwise support a means for establishing an uplink connection with the network node based on receiving the downlink alert message and an expiration of the delay. The communications manager 820 may be configured as or otherwise support a means for communicating information using the established uplink connection.

By including or configuring the communications manager 820 in accordance with examples as described herein, the device 805 (e.g., a processor controlling or otherwise coupled to the receiver 810, the transmitter 815, the communications manager 820, or a combination thereof) may support techniques for implementing a delay, a pre-paging alert, or a combination thereof as described herein, which may result in improved coverage, communications reliability, or both.

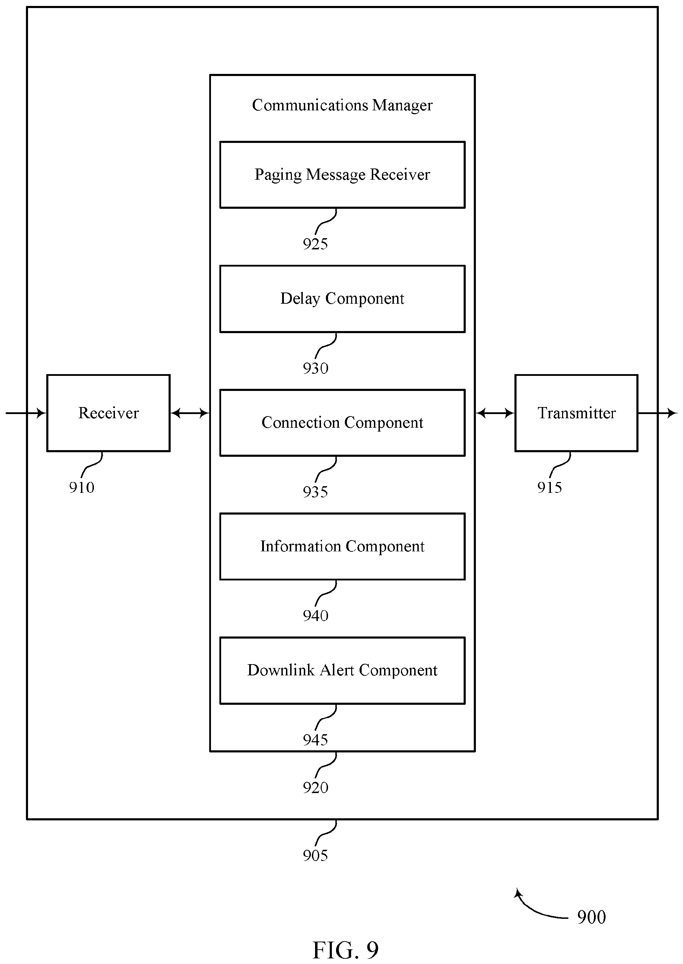

**FIG. 9** shows a block diagram 900 of a device 905 that supports techniques for mobile terminated calls in non-terrestrial networks in accordance with aspects of the present disclosure. The device 905 may be an example of aspects of a device 805 or a UE 115 as described herein. The device 905 may include a receiver 910, a transmitter 915, and a communications manager 920. The device 905 may also include a processor. Each of these components may be in communication with one another (e.g., via one or more buses).

The receiver 910 may provide a means for receiving information such as packets, user data, control information, or any combination thereof associated with various information channels (e.g., control channels, data channels, information channels related to techniques for mobile terminated calls in non-terrestrial networks). Information may be passed on to other components of the device 905. The receiver 910 may utilize a single antenna or a set of multiple antennas.

The transmitter 915 may provide a means for transmitting signals generated by other components of the device 905. For example, the transmitter 915 may transmit information such as packets, user data, control information, or any combination thereof associated with various information channels (e.g., control channels, data channels, information channels related to techniques for mobile terminated calls in non-terrestrial networks). In some examples, the transmitter 915 may be co-located with a receiver 910 in a transceiver module. The transmitter 915 may utilize a single antenna or a set of multiple antennas.

The device 905, or various components thereof, may be an example of means for performing various aspects of techniques for mobile terminated calls in non-terrestrial networks as described herein. For example, the communications manager 920 may include a paging message receiver 925, a delay component 930, a connection component 935, an information component 940, a downlink alert component 945, or any combination thereof. The communications manager 920 may be an example of aspects of a communications manager 820 as described herein. In some examples, the communications manager 920, or various components thereof, may be configured to perform various operations (e.g., receiving, monitoring, transmitting) using or otherwise in cooperation with the receiver 910, the transmitter 915, or both. For example, the communications manager 920 may receive information from the receiver 910, send information to the transmitter 915, or be integrated in combination with the receiver 910, the transmitter 915, or both to receive information, transmit information, or perform various other operations as described herein.

The communications manager 920 may support wireless communications at a UE in accordance with examples as disclosed herein. The paging message receiver 925 may be configured as or otherwise support a means for receiving, from a network node, a paging message indicating information for communication between the network node and the UE. The delay component 930 may be configured as or otherwise support a means for identifying a delay based on receiving the paging message, a condition of a communication link satisfying a threshold, or a combination thereof. The connection component 935 may be configured as or otherwise support a means for establishing an uplink connection with the network node based on an expiration of the delay. The information component 940 may be configured as or otherwise support a means for communicating the information using the uplink connection.

Additionally or alternatively, the communications manager 920 may support wireless communications at a UE in accordance with examples as disclosed herein. The downlink alert component 945 may be configured as or otherwise support a means for receiving, from a network node, a downlink alert message indicating a subsequent transmission of a paging message to the UE. The delay component 930 may be configured as or otherwise support a means for identifying, at the UE, a delay based on receiving the downlink alert message. The connection component 935 may be configured as or otherwise support a means for establishing an uplink connection with the network node based on receiving the downlink alert message and an expiration of the delay. The information component 940 may be configured as or otherwise support a means for communicating information using the established uplink connection.

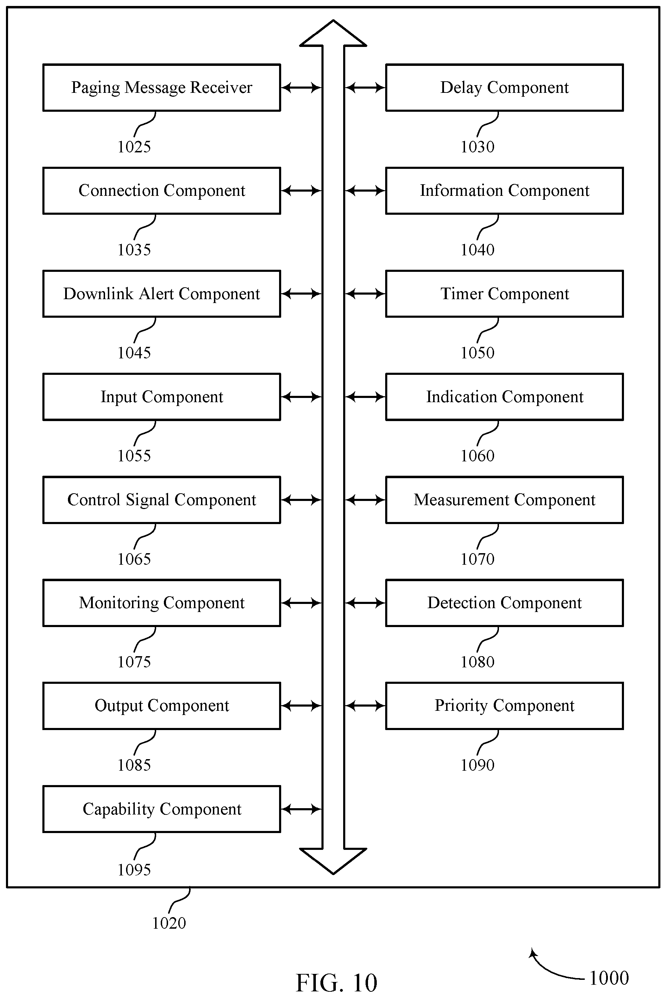

**FIG. 10** shows a block diagram 1000 of a communications manager 1020 that supports techniques for mobile terminated calls in non-terrestrial networks in accordance with aspects of the present disclosure. The communications manager 1020 may be an example of aspects of a communications manager 820, a communications manager 920, or both, as described herein. The communications manager 1020, or various components thereof, may be an example of means for performing various aspects of techniques for mobile terminated calls in non-terrestrial networks as described herein. For example, the communications manager 1020 may include a paging message receiver 1025, a delay component 1030, a connection component 1035, an information component 1040, a downlink alert component 1045, a timer component 1050, an input component 1055, an indication component 1060, a control signal component 1065, a measurement component 1070, a monitoring component 1075, a detection component 1080, an output component 1085, a priority component 1090, a capability component 1095, or any combination thereof. Each of these components may communicate, directly or indirectly, with one another (e.g., via one or more buses).

The communications manager 1020 may support wireless communications at a UE in accordance with examples as disclosed herein. The paging message receiver 1025 may be configured as or otherwise support a means for receiving, from a network node, a paging message indicating information for communication between the network node and the UE. The delay component 1030 may be configured as or otherwise support a means for identifying a delay based on receiving the paging message, a condition of a communication link satisfying a threshold, or a combination thereof. The connection component 1035 may be configured as or otherwise support a means for establishing an uplink connection with the network node based on an expiration of the delay. The information component 1040 may be configured as or otherwise support a means for communicating the information using the uplink connection.

In some examples, the timer component 1050 may be configured as or otherwise support a means for initiating, at the UE, a timer based on receiving the paging message and the condition of the communication link satisfying the threshold, where the delay includes a duration of the timer.

In some examples, the input component 1055 may be configured as or otherwise support a means for receiving, at the UE, input from a user of the UE, where the delay includes a duration between receiving the paging message and receiving the input from the user.

In some examples, the indication component 1060 may be configured as or otherwise support a means for receiving, at a non-access stratum layer of the UE, an indication of the received paging message from a radio resource control layer, where establishing the uplink connection is in response to the expiration of the delay after receiving the indication.

In some examples, the indication component 1060 may be configured as or otherwise support a means for transmitting, from the radio resource control layer in response to receiving the indication and in response to the expiration of the delay, an indication for the non-access stratum layer to establish the uplink connection.

In some examples, the connection component 1035 may be configured as or otherwise support a means for establishing the uplink connection based on the received indication.

In some examples, the timer component 1050 may be configured as or otherwise support a means for determining a duration of a timer corresponding to the delay based on a configuration of the UE, the condition of the communication link, a measurement of the communication link, an uplink parameter of the communication link, an antenna configuration, or a combination thereof, where identifying the delay is based on determining the duration.

In some examples, the control signal component 1065 may be configured as or otherwise support a means for receiving control signaling indicating a duration of the delay, where identifying the delay is based on receiving the control signaling.

In some examples, the control signaling includes radio resource control signaling, signaling of a control element of a medium access control layer, a system information block broadcast, or any combination thereof.

In some examples, the measurement component 1070 may be configured as or otherwise support a means for determining the condition of the communication link based on receiving the paging message, the condition indicating one or more channel conditions. In some examples, the measurement component 1070 may be configured as or otherwise support a means for comparing the condition with the threshold, where the threshold is indicated via control signaling or a configuration of the UE. In some examples, the measurement component 1070 may be configured as or otherwise support a means for determining that the condition satisfies the threshold based on the comparing, where identifying the delay is based on determining that the measurement satisfies the threshold. In some examples, the condition includes a reference signal received power measurement, a received signal strength indicator measurement, a signal to noise ratio measurement, an uplink parameter of the communication link, an antenna configuration, or any combination thereof.

In some examples, the monitoring component 1075 may be configured as or otherwise support a means for monitoring for a response from the network node. In some examples, the detection component 1080 may be configured as or otherwise support a means for detecting that one or more uplink communication attempts have failed based on monitoring for the response from the network node, where identifying the delay is based on detecting that the one or more uplink communication attempts have failed.

In some examples, the output component 1085 may be configured as or otherwise support a means for causing the UE to output one or more indications of one or more requested actions to improve link performance based on identifying the delay, where establishing the uplink connection is based on the one or more requested actions.

In some examples, to support establishing the uplink connection, the connection component 1035 may be configured as or otherwise support a means for transmitting a paging response message based on the paging message and the expiration of the delay.

In some examples, to support establishing the uplink connection, the connection component 1035 may be configured as or otherwise support a means for initiating a mobile originated message based on the expiration of the delay.

In some examples, to support receiving the paging message, the paging message receiver 1025 may be configured as or otherwise support a means for receiving an indication of a priority of the information, where identifying the delay is based on the priority of the information satisfying a priority threshold. In some examples, the capability component 1095 may be configured as or otherwise support a means for transmitting a capability message to the network node, where receiving the indication of the priority of the information is based on the capability message.

Additionally or alternatively, the communications manager 1020 may support wireless communications at a UE in accordance with examples as disclosed herein. The downlink alert component 1045 may be configured as or otherwise support a means for receiving, from a network node, a downlink alert message indicating a subsequent transmission of a paging message to the UE. In some examples, the delay component 1030 may be configured as or otherwise support a means for identifying, at the UE, a delay based on receiving the downlink alert message. In some examples, the connection component 1035 may be configured as or otherwise support a means for establishing an uplink connection with the network node based on receiving the downlink alert message and an expiration of the delay. In some examples, the information component 1040 may be configured as or otherwise support a means for communicating information using the established uplink connection.

In some examples, the timer component 1050 may be configured as or otherwise support a means for initiating, at the UE, a timer based on receiving the paging message, where the delay includes a duration of the timer. In some examples, the input component 1055 may be configured as or otherwise support a means for receiving, at the UE, input from a user of the UE, where the delay includes a duration between receiving the downlink alert message and receiving the input from the user.

In some examples, the paging message receiver 1025 may be configured as or otherwise support a means for receiving, based on the downlink alert message, the paging message. In some examples, the connection component 1035 may be configured as or otherwise support a means for transmitting a paging response message based on receiving the paging message, where establishing the uplink connection is based on the paging response message.

In some examples, to support receiving the downlink alert message, the downlink alert component 1045 may be configured as or otherwise support a means for receiving a sequence associated with the downlink alert message, where the sequence corresponds to an identifier of the UE, the sequence is configured by the network node via control signaling, the sequence corresponds to a group of UEs including the UE, or any combination thereof.

In some examples, the downlink alert component 1045 may be configured as or otherwise support a means for searching for the sequence associated with the downlink alert message, where the sequence operates at a first signal to noise ratio lower than a second signal to noise ratio associated with a sync signal from the network node.

In some examples, the downlink alert component 1045 may be configured as or otherwise support a means for identifying the sequence based on the identifier, a mapping associated with the downlink alert message, or both, where the identifier of the UE is negotiated over a non-access stratum layer, the mapping depends on a temporary user identifier, the downlink alert message includes an eight bit or sixteen bit medium access control identifier, or any combination thereof.

In some examples, to support establishing the uplink connection, the connection component 1035 may be configured as or otherwise support a means for initiating a mobile originated message based on the expiration of the delay.

In some examples, the control signal component 1065 may be configured as or otherwise support a means for receiving control signaling indicating a duration of a timer corresponding to the delay, where the control signaling includes radio resource control signaling, signaling of a control element of a medium access control layer, a system information block broadcast, or any combination thereof.

In some examples, the information is associated with a priority that satisfies a priority threshold. In some examples, receiving the downlink alert message is based on the information being associated with the priority that satisfies the priority threshold.

In some examples, the information corresponds to an emergency use, and receiving the downlink alert message is based on the information corresponding to the emergency use, an indication from a core network of the downlink alert message, or a combination thereof.

In some examples, the output component 1085 may be configured as or otherwise support a means for causing the UE to output one or more indications of one or more requested actions to improve link performance based on identifying the delay, where establishing the uplink connection is based on the one or more requested actions.

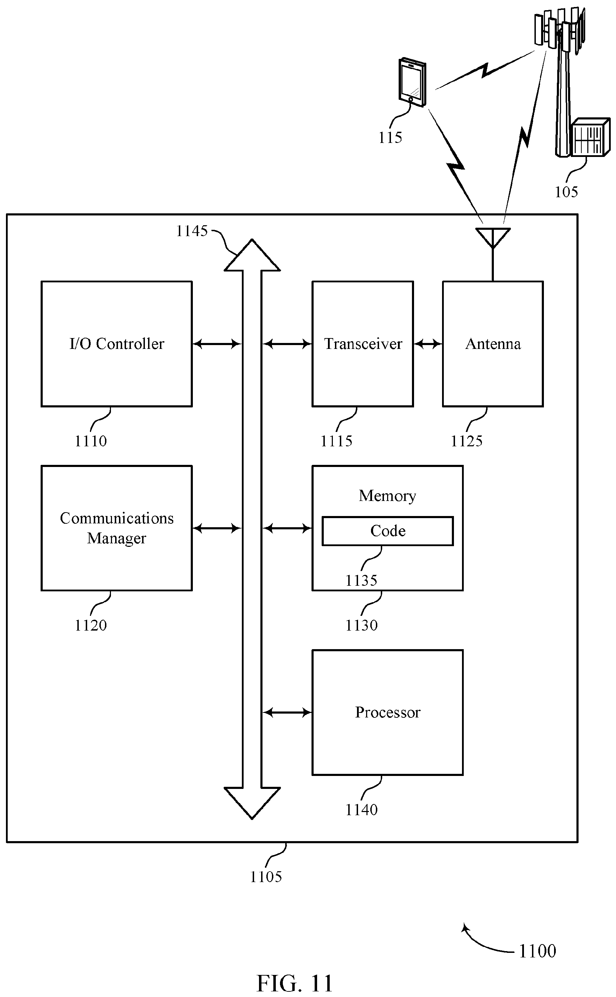

**FIG. 11** shows a diagram of a system 1100 including a device 1105 that supports techniques for mobile terminated calls in non-terrestrial networks in accordance with aspects of the present disclosure. The device 1105 may be an example of or include the components of a device 805, a device 905, or a UE 115 as described herein. The device 1105 may communicate wirelessly with one or more base stations 105, UEs 115, or any combination thereof. The device 1105 may include components for bi-directional voice and data communications including components for transmitting and receiving communications, such as a communications manager 1120, an input/output (I/O) controller 1110, a transceiver 1115, an antenna 1125, a memory 1130, code 1135, and a processor 1140. These components may be in electronic communication or otherwise coupled (e.g., operatively, communicatively, functionally, electronically, electrically) via one or more buses (e.g., a bus 1145).

The I/O controller 1110 may manage input and output signals for the device 1105. The I/O controller 1110 may also manage peripherals not integrated into the device 1105. In some cases, the I/O controller 1110 may represent a physical connection or port to an external peripheral. In some cases, the I/O controller 1110 may utilize an operating system such as iOS^{®}, ANDROID^{®}, MS-DOS^{®}, MS-WINDOWS^{®}, OS/2^{®}, UNIX^{®}, LINUX^{®}, or another known operating system. Additionally or alternatively, the I/O controller 1110 may represent or interact with a modem, a keyboard, a mouse, a touchscreen, or a similar device. In some cases, the I/O controller 1110 may be implemented as part of a processor, such as the processor 1140. In some cases, a user may interact with the device 1105 via the I/O controller 1110 or via hardware components controlled by the I/O controller 1110.

In some cases, the device 1105 may include a single antenna 1125. However, in some other cases, the device 1105 may have more than one antenna 1125, which may be capable of concurrently transmitting or receiving multiple wireless transmissions. The transceiver 1115 may communicate bi-directionally, via the one or more antennas 1125, wired, or wireless links as described herein. For example, the transceiver 1115 may represent a wireless transceiver and may communicate bi-directionally with another wireless transceiver. The transceiver 1115 may also include a modem to modulate the packets, to provide the modulated packets to one or more antennas 1125 for transmission, and to demodulate packets received from the one or more antennas 1125. The transceiver 1115, or the transceiver 1115 and one or more antennas 1125, may be an example of a transmitter 815, a transmitter 915, a receiver 810, a receiver 910, or any combination thereof or component thereof, as described herein.

The memory 1130 may include random access memory (RAM) and read-only memory (ROM). The memory 1130 may store computer-readable, computer-executable code 1135 including instructions that, when executed by the processor 1140, cause the device 1105 to perform various functions described herein. The code 1135 may be stored in a non-transitory computer-readable medium such as system memory or another type of memory. In some cases, the code 1135 may not be directly executable by the processor 1140 but may cause a computer (e.g., when compiled and executed) to perform functions described herein. In some cases, the memory 1130 may contain, among other things, a basic I/O system (BIOS) which may control basic hardware or software operation such as the interaction with peripheral components or devices.

The processor 1140 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1140 may be configured to operate a memory array using a memory controller. In some other cases, a memory controller may be integrated into the processor 1140. The processor 1140 may be configured to execute computer-readable instructions stored in a memory (e.g., the memory 1130) to cause the device 1105 to perform various functions (e.g., functions or tasks supporting techniques for mobile terminated calls in non-terrestrial networks). For example, the device 1105 or a component of the device 1105 may include a processor 1140 and memory 1130 coupled to the processor 1140, the processor 1140 and memory 1130 configured to perform various functions described herein.

The communications manager 1120 may support wireless communications at a UE in accordance with examples as disclosed herein. For example, the communications manager 1120 may be configured as or otherwise support a means for receiving, from a network node, a paging message indicating information for communication between the network node and the UE. The communications manager 1120 may be configured as or otherwise support a means for identifying a delay based on receiving the paging message, a measurement of a communication link satisfying a threshold, or a combination thereof. The communications manager 1120 may be configured as or otherwise support a means for establishing an uplink connection with the network node based on an expiration of the delay. The communications manager 1120 may be configured as or otherwise support a means for communicating the information using the uplink connection.

Additionally or alternatively, the communications manager 1120 may support wireless communications at a UE in accordance with examples as disclosed herein. For example, the communications manager 1120 may be configured as or otherwise support a means for receiving, from a network node, a downlink alert message indicating a subsequent transmission of a paging message to the UE. The communications manager 1120 may be configured as or otherwise support a means for identifying, at the UE, a delay based on receiving the downlink alert message. The communications manager 1120 may be configured as or otherwise support a means for establishing an uplink connection with the network node based on receiving the downlink alert message and an expiration of the delay. The communications manager 1120 may be configured as or otherwise support a means for communicating information using the established uplink connection.

By including or configuring the communications manager 1120 in accordance with examples as described herein, the device 1105 may support techniques for implementing a delay, a pre-paging alert, or a combination thereof as described herein. Such techniques may result in one or more potential advantages at the device 1105, such as improved user experience, coverage, communications reliability, or a combination thereof, among other advantages.

In some examples, the communications manager 1120 may be configured to perform various operations (e.g., receiving, monitoring, transmitting) using or otherwise in cooperation with the transceiver 1115, the one or more antennas 1125, or any combination thereof. Although the communications manager 1120 is illustrated as a separate component, in some examples, one or more functions described with reference to the communications manager 1120 may be supported by or performed by the processor 1140, the memory 1130, the code 1135, or any combination thereof. For example, the code 1135 may include instructions executable by the processor 1140 to cause the device 1105 to perform various aspects of techniques for mobile terminated calls in non-terrestrial networks as described herein, or the processor 1140 and the memory 1130 may be otherwise configured to perform or support such operations.

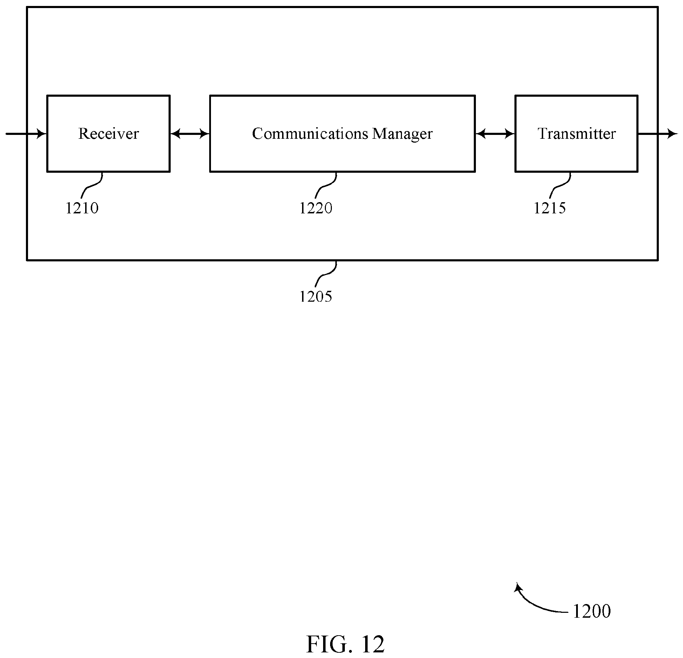

**FIG. 12** shows a block diagram 1200 of a device 1205 that supports techniques for mobile terminated calls in non-terrestrial networks in accordance with aspects of the present disclosure. The device 1205 may be an example of aspects of a wireless node (e.g., a base station 105, a satellite 160, and the like) as described herein. The device 1205 may include a receiver 1210, a transmitter 1215, and a communications manager 1220. The device 1205 may also include a processor. Each of these components may be in communication with one another (e.g., via one or more buses).

The receiver 1210 may provide a means for receiving information such as packets, user data, control information, or any combination thereof associated with various information channels (e.g., control channels, data channels, information channels related to techniques for mobile terminated calls in non-terrestrial networks). Information may be passed on to other components of the device 1205. The receiver 1210 may utilize a single antenna or a set of multiple antennas.

The transmitter 1215 may provide a means for transmitting signals generated by other components of the device 1205. For example, the transmitter 1215 may transmit information such as packets, user data, control information, or any combination thereof associated with various information channels (e.g., control channels, data channels, information channels related to techniques for mobile terminated calls in non-terrestrial networks). In some examples, the transmitter 1215 may be co-located with a receiver 1210 in a transceiver module. The transmitter 1215 may utilize a single antenna or a set of multiple antennas.

The communications manager 1220, the receiver 1210, the transmitter 1215, or various combinations thereof or various components thereof may be examples of means for performing various aspects of techniques for mobile terminated calls in non-terrestrial networks as described herein. For example, the communications manager 1220, the receiver 1210, the transmitter 1215, or various combinations or components thereof may support a method for performing one or more of the functions described herein.

In some examples, the communications manager 1220, the receiver 1210, the transmitter 1215, or various combinations or components thereof may be implemented in hardware (e.g., in communications management circuitry). The hardware may include a processor, a DSP, an ASIC, an FPGA or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 1220, the receiver 1210, the transmitter 1215, or various combinations or components thereof may be implemented in code (e.g., as communications management software or firmware) executed by a processor. If implemented in code executed by a processor, the functions of the communications manager 1220, the receiver 1210, the transmitter 1215, or various combinations or components thereof may be performed by a general-purpose processor, a DSP, a CPU, an ASIC, an FPGA, or any combination of these or other programmable logic devices (e.g., configured as or otherwise supporting a means for performing the functions described in the present disclosure).

In some examples, the communications manager 1220 may be configured to perform various operations (e.g., receiving, monitoring, transmitting) using or otherwise in cooperation with the receiver 1210, the transmitter 1215, or both. For example, the communications manager 1220 may receive information from the receiver 1210, send information to the transmitter 1215, or be integrated in combination with the receiver 1210, the transmitter 1215, or both to receive information, transmit information, or perform various other operations as described herein.

The communications manager 1220 may support wireless communications at a network node in accordance with examples as disclosed herein. For example, the communications manager 1220 may be configured as or otherwise support a means for transmitting, to a UE, a paging message indicating information for communication between the network node and the UE. The communications manager 1220 may be configured as or otherwise support a means for identifying, at the network node, a delay based on transmitting the paging message. The communications manager 1220 may be configured as or otherwise support a means for establishing a downlink connection with the UE based on an expiration of the delay. The communications manager 1220 may be configured as or otherwise support a means for communicating the information using the downlink connection.

Additionally or alternatively, the communications manager 1220 may support wireless communications at a network node in accordance with examples as disclosed herein. For example, the communications manager 1220 may be configured as or otherwise support a means for transmitting, to a UE, a downlink alert message indicating a subsequent transmission of a paging message to the UE. The communications manager 1220 may be configured as or otherwise support a means for identifying, at the network node, a delay based on receiving the downlink alert message. The communications manager 1220 may be configured as or otherwise support a means for establishing a downlink connection with the UE based on transmitting the downlink alert message and an expiration of the delay. The communications manager 1220 may be configured as or otherwise support a means for communicating information using the established downlink connection.

By including or configuring the communications manager 1220 in accordance with examples as described herein, the device 1205 (e.g., a processor controlling or otherwise coupled to the receiver 1210, the transmitter 1215, the communications manager 1220, or a combination thereof) may support techniques for implementing a delay, a pre-paging alert, or a combination thereof as described herein. Such techniques may result in one or more potential advantages at the device 1205, such as improved communications reliability, among other advantages.

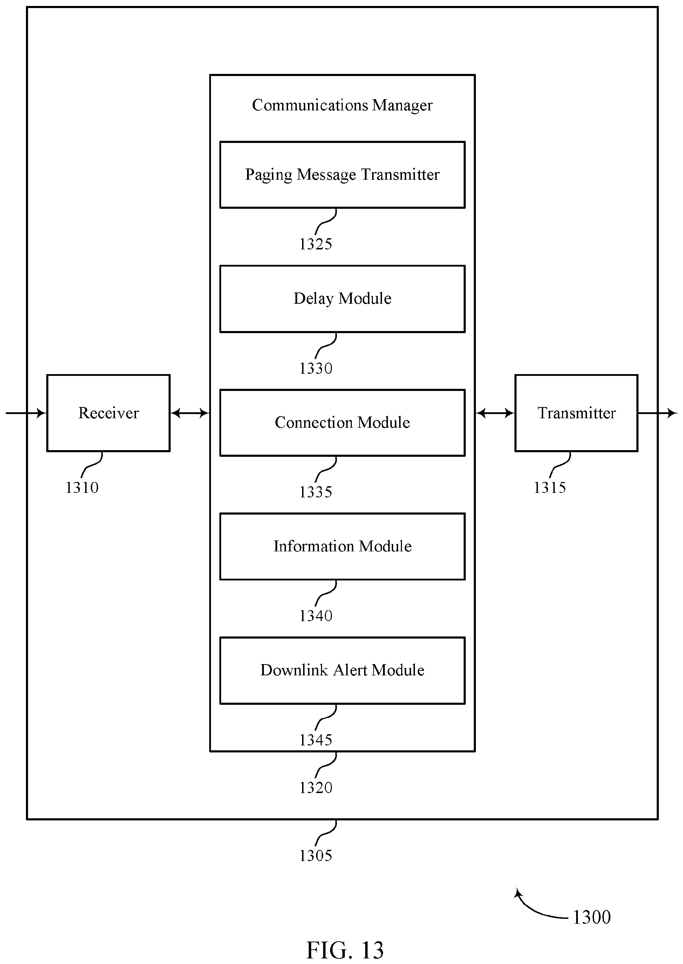

**FIG. 13** shows a block diagram 1300 of a device 1305 that supports techniques for mobile terminated calls in non-terrestrial networks in accordance with aspects of the present disclosure. The device 1305 may be an example of aspects of a device 1205 as described herein. The device 1305 may include a receiver 1310, a transmitter 1315, and a communications manager 1320. The device 1305 may also include a processor. Each of these components may be in communication with one another (e.g., via one or more buses).

The receiver 1310 may provide a means for receiving information such as packets, user data, control information, or any combination thereof associated with various information channels (e.g., control channels, data channels, information channels related to techniques for mobile terminated calls in non-terrestrial networks). Information may be passed on to other components of the device 1305. The receiver 1310 may utilize a single antenna or a set of multiple antennas.

The transmitter 1315 may provide a means for transmitting signals generated by other components of the device 1305. For example, the transmitter 1315 may transmit information such as packets, user data, control information, or any combination thereof associated with various information channels (e.g., control channels, data channels, information channels related to techniques for mobile terminated calls in non-terrestrial networks). In some examples, the transmitter 1315 may be co-located with a receiver 1310 in a transceiver module. The transmitter 1315 may utilize a single antenna or a set of multiple antennas.

The device 1305, or various components thereof, may be an example of means for performing various aspects of techniques for mobile terminated calls in non-terrestrial networks as described herein. For example, the communications manager 1320 may include a paging message transmitter 1325, a delay module 1330, a connection module 1335, an information module 1340, a downlink alert module 1345, or any combination thereof. The communications manager 1320 may be an example of aspects of a communications manager 1220 as described herein. In some examples, the communications manager 1320, or various components thereof, may be configured to perform various operations (e.g., receiving, monitoring, transmitting) using or otherwise in cooperation with the receiver 1310, the transmitter 1315, or both. For example, the communications manager 1320 may receive information from the receiver 1310, send information to the transmitter 1315, or be integrated in combination with the receiver 1310, the transmitter 1315, or both to receive information, transmit information, or perform various other operations as described herein.

The communications manager 1320 may support wireless communications at a network node in accordance with examples as disclosed herein. The paging message transmitter 1325 may be configured as or otherwise support a means for transmitting, to a UE, a paging message indicating information for communication between the network node and the UE. The delay module 1330 may be configured as or otherwise support a means for identifying, at the network node, a delay based on transmitting the paging message. The connection module 1335 may be configured as or otherwise support a means for establishing a downlink connection with the UE based on an expiration of the delay. The information module 1340 may be configured as or otherwise support a means for communicating the information using the downlink connection.

Additionally or alternatively, the communications manager 1320 may support wireless communications at a network node in accordance with examples as disclosed herein. The downlink alert module 1345 may be configured as or otherwise support a means for transmitting, to a UE, a downlink alert message indicating a subsequent transmission of a paging message to the UE. The delay module 1330 may be configured as or otherwise support a means for identifying, at the network node, a delay based on receiving the downlink alert message. The connection module 1335 may be configured as or otherwise support a means for establishing a downlink connection with the UE based on transmitting the downlink alert message and an expiration of the delay. The information module 1340 may be configured as or otherwise support a means for communicating information using the established downlink connection.

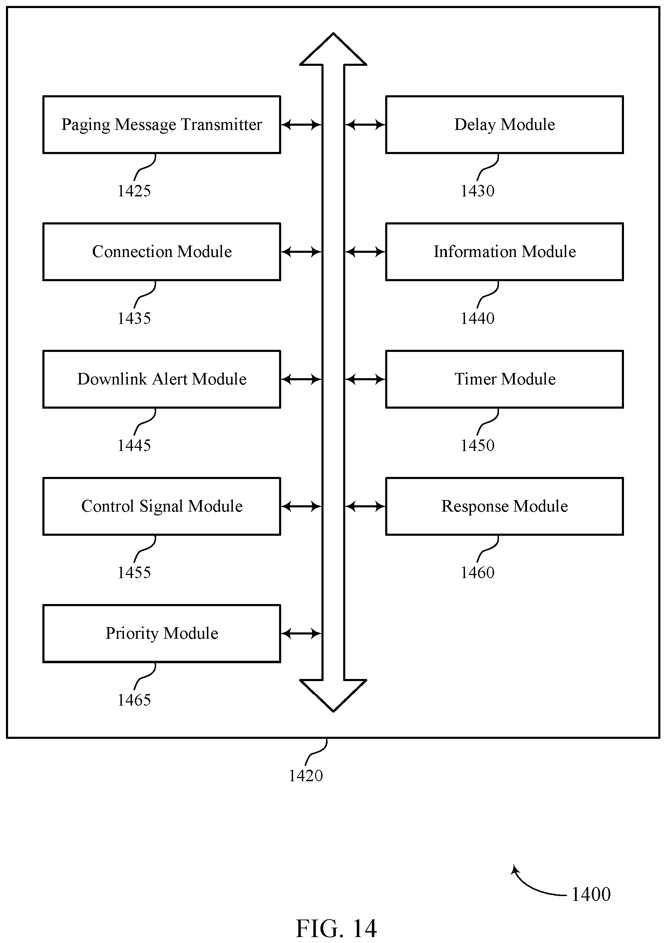

**FIG. 14** shows a block diagram 1400 of a communications manager 1420 that supports techniques for mobile terminated calls in non-terrestrial networks in accordance with aspects of the present disclosure. The communications manager 1420 may be an example of aspects of a communications manager 1220, a communications manager 1320, or both, as described herein. The communications manager 1420, or various components thereof, may be an example of means for performing various aspects of techniques for mobile terminated calls in non-terrestrial networks as described herein. For example, the communications manager 1420 may include a paging message transmitter 1425, a delay module 1430, a connection module 1435, an information module 1440, a downlink alert module 1445, a timer module 1450, a control signal module 1455, a response module 1460, a priority module 1465, or any combination thereof. Each of these components may communicate, directly or indirectly, with one another (e.g., via one or more buses).

The communications manager 1420 may support wireless communications at a network node in accordance with examples as disclosed herein. The paging message transmitter 1425 may be configured as or otherwise support a means for transmitting, to a UE, a paging message indicating information for communication between the network node and the UE. The delay module 1430 may be configured as or otherwise support a means for identifying, at the network node, a delay based on transmitting the paging message. The connection module 1435 may be configured as or otherwise support a means for establishing a downlink connection with the UE based on an expiration of the delay. The information module 1440 may be configured as or otherwise support a means for communicating the information using the downlink connection.

In some examples, the timer module 1450 may be configured as or otherwise support a means for initiating, at the network node, a timer based on transmitting the paging message, where the delay includes a duration of the timer.

In some examples, the control signal module 1455 may be configured as or otherwise support a means for transmitting control signaling indicating a duration of a timer corresponding to the delay, where the delay includes the duration of the timer.

In some examples, the control signaling includes radio resource control signaling, signaling of a control element of a medium access control layer, a system information block broadcast, or any combination thereof.

Additionally or alternatively, the communications manager 1420 may support wireless communications at a network node in accordance with examples as disclosed herein. The downlink alert module 1445 may be configured as or otherwise support a means for transmitting, to a UE, a downlink alert message indicating a subsequent transmission of a paging message to the UE. In some examples, the delay module 1430 may be configured as or otherwise support a means for identifying, at the network node, a delay based on receiving the downlink alert message. In some examples, the connection module 1435 may be configured as or otherwise support a means for establishing a downlink connection with the UE based on transmitting the downlink alert message and an expiration of the delay. In some examples, the information module 1440 may be configured as or otherwise support a means for communicating information using the established downlink connection.

In some examples, the paging message transmitter 1425 may be configured as or otherwise support a means for transmitting, based on transmitting the downlink alert message, the paging message. In some examples, the response module 1460 may be configured as or otherwise support a means for receiving a paging response message based on transmitting the paging message, where establishing the downlink connection is based on the paging response message.

In some examples, to support transmitting the downlink alert message, the downlink alert module 1445 may be configured as or otherwise support a means for transmitting a sequence associated with the downlink alert message, where the sequence corresponds to an identifier of the UE, the sequence is configured by the network node via control signaling, the sequence corresponds to a group of UEs including the UE, or any combination thereof.

In some examples, the information is associated with a priority that satisfies a priority threshold. In some examples, transmitting the downlink alert message is based on the information being associated with the priority that satisfies the priority threshold.

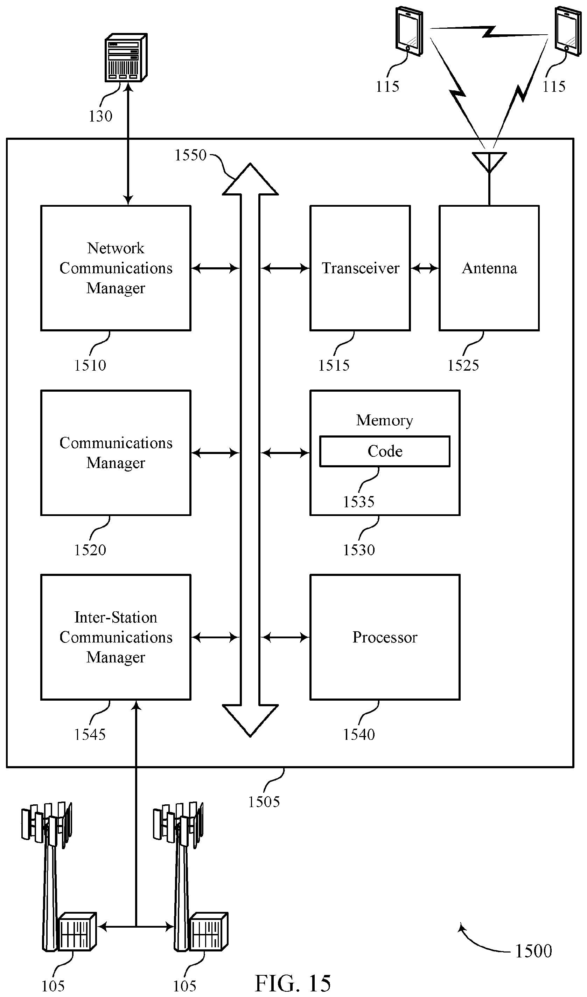

**FIG. 15** shows a diagram of a system 1500 including a device 1505 that supports techniques for mobile terminated calls in non-terrestrial networks in accordance with aspects of the present disclosure. The device 1505 may be an example of or include the components of a device 1205 or a device 1305 (e.g., a network node) as described herein. The device 1505 may communicate wirelessly with one or more base stations 105, UEs 115, or any combination thereof. The device 1505 may include components for bi-directional voice and data communications including components for transmitting and receiving communications, such as a communications manager 1520, a network communications manager 1510, a transceiver 1515, an antenna 1525, a memory 1530, code 1535, a processor 1540, and an inter-station communications manager 1545. These components may be in electronic communication or otherwise coupled (e.g., operatively, communicatively, functionally, electronically, electrically) via one or more buses (e.g., a bus 1550).

The network communications manager 1510 may manage communications with a core network 130 (e.g., via one or more wired backhaul links). For example, the network communications manager 1510 may manage the transfer of data communications for client devices, such as one or more UEs 115.

In some cases, the device 1505 may include a single antenna 1525. However, in some other cases the device 1505 may have more than one antenna 1525, which may be capable of concurrently transmitting or receiving multiple wireless transmissions. The transceiver 1515 may communicate bi-directionally, via the one or more antennas 1525, wired, or wireless links as described herein. For example, the transceiver 1515 may represent a wireless transceiver and may communicate bi-directionally with another wireless transceiver. The transceiver 1515 may also include a modem to modulate the packets, to provide the modulated packets to one or more antennas 1525 for transmission, and to demodulate packets received from the one or more antennas 1525. The transceiver 1515, or the transceiver 1515 and one or more antennas 1525, may be an example of a transmitter 1215, a transmitter 1315, a receiver 1210, a receiver 1310, or any combination thereof or component thereof, as described herein.

The memory 1530 may include RAM and ROM. The memory 1530 may store computer-readable, computer-executable code 1535 including instructions that, when executed by the processor 1540, cause the device 1505 to perform various functions described herein. The code 1535 may be stored in a non-transitory computer-readable medium such as system memory or another type of memory. In some cases, the code 1535 may not be directly executable by the processor 1540 but may cause a computer (e.g., when compiled and executed) to perform functions described herein. In some cases, the memory 1530 may contain, among other things, a BIOS which may control basic hardware or software operation such as the interaction with peripheral components or devices.

The processor 1540 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1540 may be configured to operate a memory array using a memory controller. In some other cases, a memory controller may be integrated into the processor 1540. The processor 1540 may be configured to execute computer-readable instructions stored in a memory (e.g., the memory 1530) to cause the device 1505 to perform various functions (e.g., functions or tasks supporting techniques for mobile terminated calls in non-terrestrial networks). For example, the device 1505 or a component of the device 1505 may include a processor 1540 and memory 1530 coupled to the processor 1540, the processor 1540 and memory 1530 configured to perform various functions described herein.

The inter-station communications manager 1545 may manage communications with other base stations 105, and may include a controller or scheduler for controlling communications with UEs 115 in cooperation with other base stations 105. For example, the inter-station communications manager 1545 may coordinate scheduling for transmissions to UEs 115 for various interference mitigation techniques such as beamforming or joint transmission. In some examples, the inter-station communications manager 1545 may provide an X2 interface within an LTE/LTE-A wireless communications network technology to provide communication between base stations 105.

The communications manager 1520 may support wireless communications at a network node in accordance with examples as disclosed herein. For example, the communications manager 1520 may be configured as or otherwise support a means for transmitting, to a UE, a paging message indicating information for communication between the network node and the UE. The communications manager 1520 may be configured as or otherwise support a means for identifying, at the network node, a delay based on transmitting the paging message. The communications manager 1520 may be configured as or otherwise support a means for establishing a downlink connection with the UE based on an expiration of the delay. The communications manager 1520 may be configured as or otherwise support a means for communicating the information using the downlink connection.

Additionally or alternatively, the communications manager 1520 may support wireless communications at a network node in accordance with examples as disclosed herein. For example, the communications manager 1520 may be configured as or otherwise support a means for transmitting, to a UE, a downlink alert message indicating a subsequent transmission of a paging message to the UE. The communications manager 1520 may be configured as or otherwise support a means for identifying, at the network node, a delay based on receiving the downlink alert message. The communications manager 1520 may be configured as or otherwise support a means for establishing a downlink connection with the UE based on transmitting the downlink alert message and an expiration of the delay. The communications manager 1520 may be configured as or otherwise support a means for communicating information using the established downlink connection.

By including or configuring the communications manager 1520 in accordance with examples as described herein, the device 1505 may support techniques for implementing a delay, a pre-paging alert, or a combination thereof as described herein. Such techniques may result in one or more potential advantages at the device 1505, such as improved communications reliability, among other advantages.

In some examples, the communications manager 1520 may be configured to perform various operations (e.g., receiving, monitoring, transmitting) using or otherwise in cooperation with the transceiver 1515, the one or more antennas 1525, or any combination thereof. Although the communications manager 1520 is illustrated as a separate component, in some examples, one or more functions described with reference to the communications manager 1520 may be supported by or performed by the processor 1540, the memory 1530, the code 1535, or any combination thereof. For example, the code 1535 may include instructions executable by the processor 1540 to cause the device 1505 to perform various aspects of techniques for mobile terminated calls in non-terrestrial networks as described herein, or the processor 1540 and the memory 1530 may be otherwise configured to perform or support such operations.

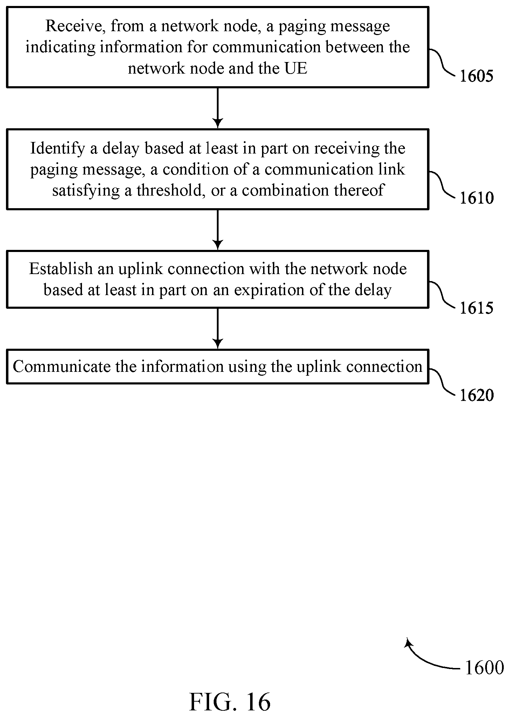

**FIG. 16** shows a flowchart illustrating a method 1600 that supports techniques for mobile terminated calls in non-terrestrial networks in accordance with aspects of the present disclosure. The operations of the method 1600 may be implemented by a UE or its components as described herein. For example, the operations of the method 1600 may be performed by a UE 115 as described with reference to FIGs. 1 through 11. In some examples, a UE may execute a set of instructions to control the functional elements of the UE to perform the described functions. Additionally or alternatively, the UE may perform aspects of the described functions using special-purpose hardware.

At 1605, the method may include receiving, from a network node, a paging message indicating information for communication between the network node and the UE. The operations of 1605 may be performed in accordance with examples as disclosed herein. In some examples, aspects of the operations of 1605 may be performed by a paging message receiver 1025 as described with reference to FIG. 10.

At 1610, the method may include identifying a delay based on receiving the paging message, a condition of a communication link satisfying a threshold, or a combination thereof. The operations of 1610 may be performed in accordance with examples as disclosed herein. In some examples, aspects of the operations of 1610 may be performed by a delay component 1030 as described with reference to FIG. 10.

At 1615, the method may include establishing an uplink connection with the network node based on an expiration of the delay. The operations of 1615 may be performed in accordance with examples as disclosed herein. In some examples, aspects of the operations of 1615 may be performed by a connection component 1035 as described with reference to FIG. 10.

At 1620, the method may include communicating the information using the uplink connection. The operations of 1620 may be performed in accordance with examples as disclosed herein. In some examples, aspects of the operations of 1620 may be performed by an information component 1040 as described with reference to FIG. 10.

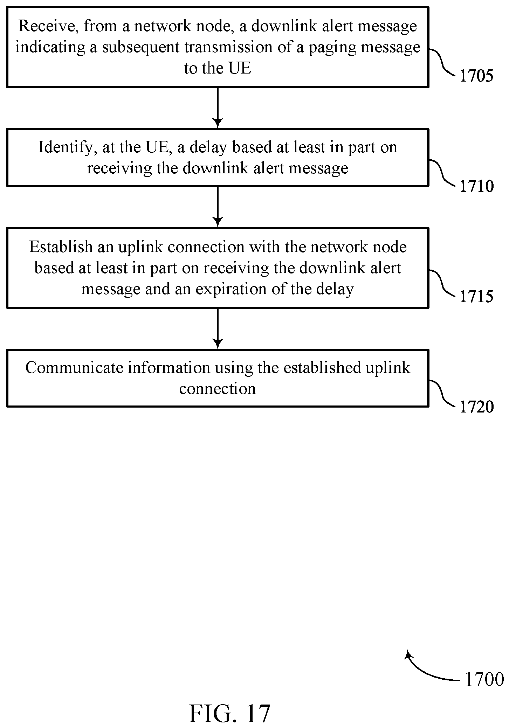

**FIG. 17** shows a flowchart illustrating a method 1700 that supports techniques for mobile terminated calls in non-terrestrial networks in accordance with aspects of the present disclosure. The operations of the method 1700 may be implemented by a UE or its components as described herein. For example, the operations of the method 1700 may be performed by a UE 115 as described with reference to FIGs. 1 through 11. In some examples, a UE may execute a set of instructions to control the functional elements of the UE to perform the described functions. Additionally or alternatively, the UE may perform aspects of the described functions using special-purpose hardware.

At 1705, the method may include receiving, from a network node, a downlink alert message indicating a subsequent transmission of a paging message to the UE. The operations of 1705 may be performed in accordance with examples as disclosed herein. In some examples, aspects of the operations of 1705 may be performed by a downlink alert component 1045 as described with reference to FIG. 10.

At 1710, the method may include identifying, at the UE, a delay based on receiving the downlink alert message. The operations of 1710 may be performed in accordance with examples as disclosed herein. In some examples, aspects of the operations of 1710 may be performed by a delay component 1030 as described with reference to FIG. 10.

At 1715, the method may include establishing an uplink connection with the network node based on receiving the downlink alert message and an expiration of the delay. The operations of 1715 may be performed in accordance with examples as disclosed herein. In some examples, aspects of the operations of 1715 may be performed by a connection component 1035 as described with reference to FIG. 10.

At 1720, the method may include communicating information using the established uplink connection. The operations of 1720 may be performed in accordance with examples as disclosed herein. In some examples, aspects of the operations of 1720 may be performed by an information component 1040 as described with reference to FIG. 10.

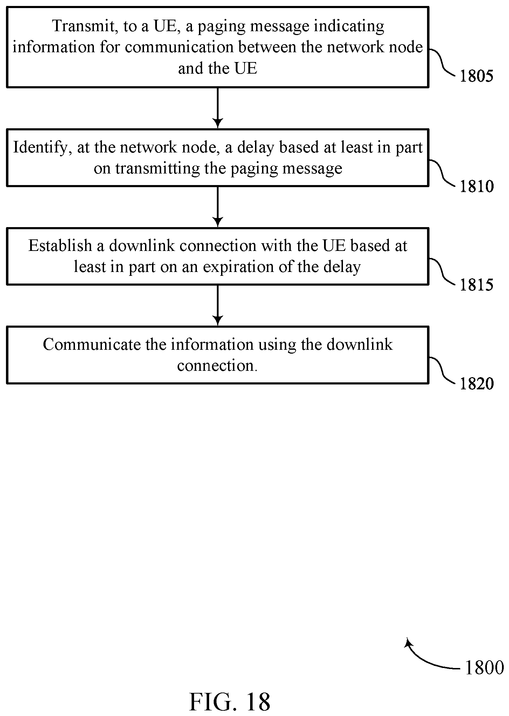

**FIG. 18** shows a flowchart illustrating a method 1800 that supports techniques for mobile terminated calls in non-terrestrial networks in accordance with aspects of the present disclosure. The operations of the method 1800 may be implemented by a network node or its components as described herein. For example, the operations of the method 1800 may be performed by a network node as described with reference to FIGs. 1 through 7 and 12 through 15. In some examples, a network node may execute a set of instructions to control the functional elements of the base station to perform the described functions. Additionally or alternatively, the network node may perform aspects of the described functions using special-purpose hardware.

At 1805, the method may include transmitting, to a UE, a paging message indicating information for communication between the network node and the UE. The operations of 1805 may be performed in accordance with examples as disclosed herein. In some examples, aspects of the operations of 1805 may be performed by a paging message transmitter 1425 as described with reference to FIG. 14.

At 1810, the method may include identifying, at the network node, a delay based on transmitting the paging message. The operations of 1810 may be performed in accordance with examples as disclosed herein. In some examples, aspects of the operations of 1810 may be performed by a delay module 1430 as described with reference to FIG. 14.

At 1815, the method may include establishing a downlink connection with the UE based on an expiration of the delay. The operations of 1815 may be performed in accordance with examples as disclosed herein. In some examples, aspects of the operations of 1815 may be performed by a connection module 1435 as described with reference to FIG. 14.

At 1820, the method may include communicating the information using the downlink connection. The operations of 1820 may be performed in accordance with examples as disclosed herein. In some examples, aspects of the operations of 1820 may be performed by an information module 1440 as described with reference to FIG. 14.

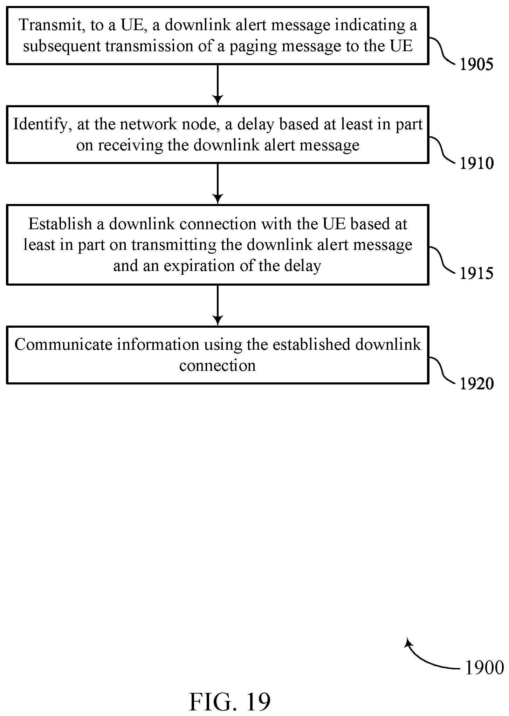

**FIG. 19** shows a flowchart illustrating a method 1900 that supports techniques for mobile terminated calls in non-terrestrial networks in accordance with aspects of the present disclosure. The operations of the method 1900 may be implemented by a network node or its components as described herein. For example, the operations of the method 1900 may be performed by a network node as described with reference to FIGs. 1 through 7 and 12 through 15. In some examples, a network node may execute a set of instructions to control the functional elements of the network node to perform the described functions. Additionally or alternatively, the network node may perform aspects of the described functions using special-purpose hardware.

At 1905, the method may include transmitting, to a UE, a downlink alert message indicating a subsequent transmission of a paging message to the UE. The operations of 1905 may be performed in accordance with examples as disclosed herein. In some examples, aspects of the operations of 1905 may be performed by a downlink alert module 1445 as described with reference to FIG. 14.

At 1910, the method may include identifying, at the network node, a delay based on receiving the downlink alert message. The operations of 1910 may be performed in accordance with examples as disclosed herein. In some examples, aspects of the operations of 1910 may be performed by a delay module 1430 as described with reference to FIG. 14.

At 1915, the method may include establishing a downlink connection with the UE based on transmitting the downlink alert message and an expiration of the delay. The operations of 1915 may be performed in accordance with examples as disclosed herein. In some examples, aspects of the operations of 1915 may be performed by a connection module 1435 as described with reference to FIG. 14.

At 1920, the method may include communicating information using the established downlink connection. The operations of 1920 may be performed in accordance with examples as disclosed herein. In some examples, aspects of the operations of 1920 may be performed by an information module 1440 as described with reference to FIG. 14.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of') indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

The term "determine" or "determining" encompasses a wide variety of actions and, therefore, "determining" can include calculating, computing, processing, deriving, investigating, looking up (such as via looking up in a table, a database or another data structure), ascertaining and the like. Also, "determining" can include receiving (such as receiving information), accessing (such as accessing data in a memory) and the like. Also, "determining" can include resolving, selecting, choosing, establishing and other such similar actions.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the appended claims.

## Claims

1. A method (1600) for wireless communications at a user equipment, UE, comprising:
receiving (1605), from a network node, a paging message indicating information for communication between the network node and the UE;
identifying (1610) a delay based at least in part on receiving the paging message, a condition of a communication link satisfying a threshold, or a combination thereof;
the method being **characterized in**:
initiating, at the UE, a timer based at least in part on receiving the paging message and the condition of the communication link satisfying the threshold, wherein the delay comprises a duration of the timer;
causing the UE to output one or more indications of one or more requested actions to improve link performance based at least in part on identifying the delay;
establishing (1615) an uplink connection with the network node based at least in part on an expiration of the delay, wherein establishing the uplink connection is based at least in part on the one or more requested actions;
communicating (1620) a paging response message using the uplink connection;.

2. The method of claim 1, further comprising:
receiving, at the UE, input from a user of the UE, wherein the delay comprises a duration between receiving the paging message and receiving the input from the user.

3. The method of claim 1, further comprising:
receiving, at a non-access stratum layer of the UE, an indication of the received paging message from a radio resource control layer, wherein establishing the uplink connection is in response to the expiration of the delay after receiving the indication; and
transmitting, from the radio resource control layer in response to receiving the indication and in response to the expiration of the delay, a second indication for the non-access stratum layer to establish the uplink connection.

4. The method of claim 3, wherein receiving the indication is in response to the expiration of the delay, further comprising:
establishing the uplink connection based at least in part on the received indication.

5. The method of claim 1, wherein the duration of timer is further based at least in part on a configuration of the UE, the condition of the communication link, a measurement of the communication link, an uplink parameter of the communication link, an antenna configuration, or a combination thereof, wherein identifying the delay is based at least in part on the duration.

6. The method of claim 1, further comprising one of the following:
(i) receiving control signaling indicating a duration of the delay, wherein identifying the delay is based at least in part on receiving the control signaling, wherein the control signaling comprises radio resource control signaling, signaling of a control element of a medium access control layer, a system information block broadcast, or any combination thereof; or
(ii) measuring the condition of the communication link based at least in part on receiving the paging message;
comparing the condition with the threshold, wherein the threshold is indicated via control signaling or a configuration of the UE; and
wherein the condition satisfying the threshold is further based at least in part on the comparing, wherein identifying the delay is based at least in part on the condition satisfying the threshold, wherein the condition comprises a reference signal received power measurement, a received signal strength indicator measurement, a signal to noise ratio measurement, an uplink parameter of the communication link, an antenna configuration, or any combination thereof.

7. The method of claim 1, further comprising:
monitoring for a response from the network node; and
detecting that one or more uplink communication attempts have failed based at least in part on monitoring for the response from the network node, wherein identifying the delay is based at least in part on detecting that the one or more uplink communication attempts have failed.

8. The method of claim 1, comprising one of the following:
(i) wherein establishing the uplink connection comprises:
transmitting a paging response message based at least in part on the paging message and the expiration of the delay; or
(ii) wherein establishing the uplink connection comprises:
initiating a mobile originated message based at least in part on the expiration of the delay.

9. The method of claim 1, wherein receiving the paging message comprises:
receiving an indication of a priority of the information, wherein identifying the delay is based at least in part on the priority of the information satisfying a priority threshold; and
transmitting a capability message to the network node, wherein receiving the indication of the priority of the information is based at least in part on the capability message.

10. A method (1700) for wireless communications at a user equipment, UE, comprising:
receiving (1705), from a network node, a downlink alert message indicating a subsequent transmission of a paging message to the UE;
identifying (1710), at the UE, a delay based at least in part on receiving the downlink alert message;
the method being **characterized in**:
initiating, at the UE, a timer based at least in part on receiving the paging message, wherein the delay comprises a duration of the timer;
causing the UE to output one or more indications of one or more requested actions to improve link performance based at least in part on identifying the delay;
establishing (1715) an uplink connection with the network node based at least in part on receiving the downlink alert message and an expiration of the delay, wherein establishing the uplink connection is based at least in part on the one or more requested actions;
communicating (1720) a paging response message using the established uplink connection.

11. The method of claim 10, further comprising one of the following:
(i) receiving, at the UE, input from a user of the UE, wherein the delay comprises a duration between receiving the downlink alert message and receiving the input from the user; or
(ii) receiving, based at least in part on the downlink alert message, the paging message; and
transmitting a paging response message based at least in part on receiving the paging message, wherein establishing the uplink connection is based at least in part on the paging response message.

12. The method of claim 11, wherein receiving the downlink alert message comprises:
receiving a sequence associated with the downlink alert message, wherein the sequence corresponds to an identifier of the UE, the sequence is configured by the network node via control signaling, the sequence corresponds to a group of UEs including the UE, or any combination thereof; and
searching for the sequence associated with the downlink alert message, wherein the sequence operates at a first signal to noise ratio lower than a second signal to noise ratio associated with a sync signal from the network node.

13. The method of claim 12, further comprising:
identifying the sequence based at least in part on the identifier, a mapping associated with the downlink alert message, or both, wherein the identifier of the UE is negotiated over a non-access stratum layer, the mapping depends on a temporary user identifier, the downlink alert message comprises an eight bit or sixteen bit medium access control identifier, or any combination thereof.

14. The method of claim 10, wherein establishing the uplink connection comprises:
initiating a mobile originated message based at least in part on the expiration of the delay.

15. The method of claim 10, further comprising:
receiving control signaling indicating a duration of a timer corresponding to the delay, wherein the control signaling comprises radio resource control signaling, signaling of a control element of a medium access control layer, a system information block broadcast, or any combination thereof.

## Patentansprüche

1. Ein Verfahren (1600) zur drahtlosen Kommunikation an einem Benutzergerät, UE, das Folgendes aufweist:
Empfangen (1605) einer Funkrufnachricht, die Informationen für eine Kommunikation zwischen einem Netzwerkknoten und dem UE angibt, von dem Netzwerkknoten;
Identifizieren (1610) einer Verzögerung, zumindest teilweise basierend auf dem Empfang der Funkrufnachricht, darauf, dass eine Bedingung einer Kommunikationsverbindung einem Schwellenwert genügt, oder auf einer Kombination dieser;
wobei das Verfahren durch Folgendes gekennzeichnet ist:
Initiieren eines Timers an dem UE, zumindest teilweise basierend auf dem Empfang der Funkrufnachricht und darauf, dass die Bedingung der Kommunikationsverbindung dem Schwellenwert genügt, wobei die Verzögerung eine Dauer des Timers aufweist;
Veranlassen des UE zur Ausgabe einer oder mehrerer Angaben einer oder mehrerer angeforderter Aktionen zur Verbesserung einer Verbindungsleistung zumindest teilweise basierend auf der Identifikation der Verzögerung;
Herstellen (1615) einer Uplink-Verbindung zu dem Netzwerkknoten zumindest teilweise basierend auf einem Ablaufen der Verzögerung, wobei das Herstellen der Uplink-Verbindung zumindest teilweise auf der einen oder den mehreren angeforderten Aktionen basiert;
Kommunizieren (1620) einer Funkruf-Antwortnachricht unter Verwendung der Uplink-Verbindung.

2. Verfahren nach Anspruch 1, das ferner Folgendes aufweist:
Empfangen einer Eingabe eines Benutzers des UE an dem UE, wobei die Verzögerung eine Dauer zwischen dem Empfangen der Funkrufnachricht und dem Empfangen der Eingabe des Benutzers aufweist.

3. Verfahren nach Anspruch 1, das ferner Folgendes aufweist:
Empfangen einer Angabe der empfangenen Funkrufnachricht von einer Funkressourcen-Steuerebene an einer Nichtzugriffs-Schichtebene des UE, wobei das Herstellen der Uplink-Verbindung als Reaktion auf das Ablaufen der Verzögerung nach dem Empfang der Angabe erfolgt; und
Senden einer zweiten Angabe für die Nichtzugriffs-Schichtebene zur Herstellung der Uplink-Verbindung von der Funkressourcen-Steuerebene als Reaktion auf den Empfang der Angabe und als Reaktion auf das Ablaufen der Verzögerung.

4. Verfahren nach Anspruch 3, wobei das Empfangen der Angabe als Reaktion auf das Ablaufen der Verzögerung erfolgt, wobei das Verfahren ferner Folgendes aufweist:
Herstellen der Uplink-Verbindung zumindest teilweise basierend auf der empfangenen Angabe.

5. Verfahren nach Anspruch 1, wobei die Dauer des Timers ferner zumindest teilweise auf einer Konfiguration des UE, der Bedingung der Kommunikationsverbindung, einer Messung der Kommunikationsverbindung, einem Uplink-Parameter der Kommunikationsverbindung, einer Antennenkonfiguration oder einer Kombination dieser basiert, wobei das Identifizieren der Verzögerung zumindest teilweise auf der Dauer basiert.

6. Verfahren nach Anspruch 1, das ferner eines unter Folgendem aufweist:
(i) Empfangen einer Steuersignalgebung, die eine Dauer der Verzögerung angibt, wobei das Identifizieren der Verzögerung zumindest teilweise auf dem Empfang der Steuersignalgebung basiert, wobei die Steuersignalgebung eine Funkressourcen-Steuersignalgebung, eine Signalgebung eines Steuerelements einer Medienzugriffs-Steuerebene, eine Systeminformationsblock-Übertragung oder eine Kombination dieser aufweist; oder
(ii) Messen der Bedingung der Kommunikationsverbindung zumindest teilweise basierend auf dem Empfang der Funkrufnachricht;
Vergleichen der Bedingung mit dem Schwellenwert, wobei der Schwellenwert über eine Steuersignalgebung oder eine Konfiguration des UE angegeben wird; und
wobei der Umstand, dass die Bedingung dem Schwellenwert genügt, ferner zumindest teilweise auf dem Vergleich basiert, wobei das Identifizieren der Verzögerung zumindest teilweise darauf basiert, dass die Bedingung dem Schwellenwert genügt, wobei die Bedingung eine Referenzsignal-Empfangsleistungsmessung, eine Empfangssignalstärken-Indikatormessung, eine Signal-Rausch-Verhältnismessung, einen Uplink-Parameter der Kommunikationsverbindung, eine Antennenkonfiguration oder eine Kombination dieser aufweist.

7. Verfahren nach Anspruch 1, das ferner Folgendes aufweist:
Überwachen auf eine Antwort von dem Netzwerkknoten; und
Erfassen, dass ein oder mehrere Uplink-Kommunikationsversuche fehlgeschlagen sind, zumindest teilweise basierend auf der Überwachung auf die Antwort von dem Netzwerkknoten, wobei das Identifizieren der Verzögerung zumindest teilweise auf der Erfassung basiert, dass der eine oder die mehreren Uplink-Kommunikationsversuche fehlgeschlagen sind.

8. Verfahren nach Anspruch 1, das eines von Folgendem aufweist:
(i) das Herstellen der Uplink-Verbindung aufweist Folgendes:
Senden einer Funkruf-Antwortnachricht zumindest teilweise basierend auf der Funkrufnachricht und dem Ablaufen der Verzögerung; oder
(ii) das Herstellen der Uplink-Verbindung aufweist Folgendes:
Initiieren einer Nachricht mobilen Ursprungs zumindest teilweise basierend auf dem Ablaufen der Verzögerung.

9. Verfahren nach Anspruch 1, wobei das Empfangen der Funkrufnachricht Folgendes aufweist:
Empfangen einer Angabe einer Priorität der Informationen, wobei das Identifizieren der Verzögerung zumindest teilweise darauf basiert, dass die Priorität der Informationen einem Prioritätsschwellenwert genügt; und
Senden einer Kapazitätsnachricht an den Netzwerkknoten, wobei das Empfangen der Angabe der Priorität der Informationen zumindest teilweise auf der Kapazitätsnachricht basiert.

10. Ein Verfahren (1700) zur drahtlosen Kommunikation an einem Benutzergerät, UE, das Folgendes aufweist:
Empfangen (1705) einer Downlink-Warnnachricht, die eine nachfolgende Übermittlung einer Funkrufnachricht an das UE angibt, von einem Netzwerkknoten;
Identifizieren (1710) einer Verzögerung zumindest teilweise basierend auf dem Empfang der Downlink-Warnnachricht an dem EU;
wobei das Verfahren durch Folgendes gekennzeichnet ist:
Initiieren eines Timers an dem EU zumindest teilweise basierend auf dem Empfang der Funkrufnachricht, wobei die Verzögerung eine Dauer des Timers aufweist;
Veranlassen des EU zur Ausgabe einer oder mehrerer Angaben einer oder mehrerer angeforderter Aktionen zur Verbesserung einer Verbindungsleistung zumindest teilweise basierend auf dem Identifizieren der Verzögerung;
Herstellen (1715) einer Uplink-Verbindung zu dem Netzwerkknoten zumindest teilweise basierend auf dem Empfang der Downlink-Warnnachricht und einem Ablaufen der Verzögerung, wobei das Herstellen der Uplink-Verbindung zumindest teilweise auf der einen oder den mehreren angeforderten Aktionen basiert;
Kommunizieren (1720) einer Funkruf-Antwortnachricht unter Verwendung der hergestellten Uplink-Verbindung.

11. Verfahren nach Anspruch 10, das ferner eines unter Folgendem aufweist:
(i) Empfangen einer Eingabe eines Benutzers des UE an dem UE, wobei die Verzögerung eine Dauer zwischen dem Empfangen der Downlink-Warnnachricht und dem Empfangen der Eingabe des Benutzers aufweist; oder
(ii) Empfangen der Funkrufnachricht zumindest teilweise basierend auf der Downlink-Warnnachricht; und
Senden einer Funkruf-Antwortnachricht zumindest teilweise basierend auf dem Empfangen der Funkrufnachricht, wobei das Herstellen der Uplink-Verbindung zumindest teilweise auf der Funkruf-Antwortnachricht basiert.

12. Verfahren nach Anspruch 11, wobei das Empfangen der Downlink-Warnnachricht Folgendes aufweist:
Empfangen einer der Downlink-Warnnachricht zugeordneten Sequenz, wobei die Sequenz einer Identifikation des UE entspricht, die Sequenz durch den Netzwerkknoten über eine Steuersignalgebung konfiguriert wird, die Sequenz einer Gruppe von UEs entspricht, die das UE einschließt, oder eine Kombination dieser; und
Suchen nach der der Downlink-Warnnachricht zugeordneten Sequenz, wobei die Sequenz bei einem ersten Signal-Rausch-Verhältnis arbeitet, das geringer als ein einem Synchronisationssignal von dem Netzwerkknoten zugeordnetes zweites Signal-Rausch-Verhältnis ist.

13. Verfahren nach Anspruch 12, das ferner Folgendes aufweist:
Identifizieren der Sequenz zumindest teilweise basierend auf der Identifikation, einer der Downlink-Warnnachricht zugeordneten Zuweisung oder beidem, wobei die Identifikation des UE über eine Nichtzugriffs-Schichtebene verhandelt wird, die Zuweisung von einer temporären Benutzeridentifikation abhängt, die Downlink-Warnnachricht eine Medienzugriffssteuerungs-Identifikation von acht Bits oder sechzehn Bits aufweist, oder eine Kombination dieser vorliegt.

14. Verfahren nach Anspruch 10, wobei das Herstellen der Uplink-Verbindung Folgendes aufweist:
Initiieren einer Nachricht mobilen Ursprungs zumindest teilweise basierend auf dem Ablaufen der Verzögerung.

15. Verfahren nach Anspruch 10, das ferner Folgendes aufweist:
Empfangen einer Steuersignalgebung, die eine Dauer eines Timers angibt, die der Verzögerung entspricht, wobei die Steuersignalgebung eine Funkressourcen-Steuersignalgebung, eine Signalgebung eines Steuerelements einer Medienzugriffs-Steuerebene, eine Systeminformationsblock-Übertragung oder eine Kombination dieser aufweist.

## Revendications

1. Procédé (1600) de communication sans fil au niveau d'un équipement d'utilisateur, UE, comprenant les étapes consistant à :
recevoir (1605), en provenance d'un nœud de réseau, un message de radiomessagerie indiquant des informations pour la communication entre le nœud de réseau et l'UE ;
identifier (1610) un délai sur la base, au moins en partie, de la réception du message de radiomessagerie, d'une condition d'une liaison de communication satisfaisant à un seuil ou d'une combinaison de celles-ci ;
le procédé étant **caractérisé par** les étapes consistant à :
lancer, au niveau de l'UE, un temporisateur sur la base, au moins en partie, de la réception du message de radiomessagerie et de la condition de la liaison de communication satisfaisant au seuil, le délai comprenant une durée du temporisateur ;
amener l'UE à délivrer en sortie une ou plusieurs indications d'une ou plusieurs actions demandées pour améliorer des performances de liaison, sur la base, au moins en partie, de l'identification du délai ;
établir (1615) une connexion en liaison montante avec le nœud de réseau sur la base, au moins en partie, d'une expiration du délai, l'établissement de la connexion en liaison montante étant basé, au moins en partie, sur les une ou plusieurs actions demandées ;
communiquer (1620) un message de réponse de radiomessagerie au moyen de la connexion en liaison montante.

2. Procédé selon la revendication 1, comprenant en outre l'étape consistant à :
recevoir, au niveau de l'UE, une entrée en provenance d'un utilisateur de l'UE, le délai comprenant une durée entre la réception du message de radiomessagerie et la réception de l'entrée en provenance de l'utilisateur.

3. Procédé selon la revendication 1, comprenant en outre les étapes consistant à :
recevoir, au niveau d'une couche strate de non-accès de l'UE, une indication du message de radiomessagerie reçu en provenance d'une couche de contrôle des ressources radio, l'établissement de la connexion en liaison montante étant en réponse à l'expiration du délai après réception de l'indication ; et
émettre, à partir de la couche de contrôle des ressources radio, en réponse à la réception de l'indication et en réponse à l'expiration du délai, une seconde indication pour la couche strate de non-accès afin d'établir la connexion en liaison montante.

4. Procédé selon la revendication 3, la réception de l'indication en réponse à l'expiration du délai comprenant en outre l'étape consistant à :
établir la connexion en liaison montante sur la base, au moins en partie, de l'indication reçue.

5. Procédé selon la revendication 1, la durée du temporisateur étant en outre basée, au moins en partie, sur une configuration de l'UE, la condition de la liaison de communication, une mesure de la liaison de communication, un paramètre en liaison montante de la liaison de communication, une configuration d'antenne, ou une combinaison de ceux-ci, l'identification du délai étant basée, au moins en partie, sur la durée.

6. Procédé selon la revendication 1, comprenant en outre l'une des options suivantes :
(i) recevoir une signalisation de commande indiquant une durée du délai, l'identification du délai étant basée, au moins en partie, sur la réception de la signalisation de commande, la signalisation de commande comprenant une signalisation de contrôle des ressources radio, une signalisation d'un élément de commande d'une couche de contrôle d'accès au support, une diffusion de bloc d'informations de système, ou une combinaison quelconque de celles-ci ; ou
(ii) mesurer la condition de la liaison de communication sur la base, au moins en partie, de la réception du message de radiomessagerie ;
comparer la condition au seuil, le seuil étant indiqué par l'intermédiaire d'une signalisation de commande ou d'une configuration de l'UE ; et
la condition satisfaisant au seuil étant en outre basée, au moins en partie, sur la comparaison, l'identification du délai étant basée, au moins en partie, sur la condition satisfaisant au seuil, la condition comprenant une mesure de puissance reçue de signal de référence, une mesure d'indicateur d'intensité de signal reçu, une mesure de rapport signal/bruit, un paramètre en liaison montante de la liaison de communication, une configuration d'antenne, ou une combinaison quelconque de ceux-ci.

7. Procédé selon la revendication 1, comprenant en outre les étapes consistant à :
surveiller une réponse en provenance du nœud du réseau ; et
détecter qu'une ou plusieurs tentatives de communication en liaison montante ont échoué, sur la base, au moins en partie, de la surveillance de la réponse en provenance du nœud de réseau, l'identification du délai étant basée, au moins en partie, sur la détection du fait que les une ou plusieurs tentatives de communication en liaison montante ont échoué.

8. Procédé selon la revendication 1, comprenant l'une des options suivantes :
(i) l'établissement de la connexion en liaison montante comprenant l'étape consistant à :
émettre un message de réponse de radiomessagerie sur la base, au moins en partie, du message de radiomessagerie et de l'expiration du délai ; ou
(ii) l'établissement de la connexion en liaison montante comprenant l'étape consistant à :
lancer un message issu d'un mobile, sur la base, au moins en partie, de l'expiration du délai.

9. Procédé selon la revendication 1, la réception du message de radiomessagerie comprenant les étapes consistant à :
recevoir une indication d'une priorité des informations, l'identification du délai étant basée, au moins en partie, sur le fait que la priorité des informations satisfait à un seuil de priorité ; et
émettre un message de capacité vers le nœud de réseau, la réception de l'indication de la priorité des informations étant basée, au moins en partie, sur le message de capacité.

10. Procédé (1700) de communication sans fil au niveau d'un équipement d'utilisateur, UE, comprenant les étapes consistant à :
recevoir (1705), en provenance d'un nœud de réseau, un message d'alerte en liaison descendante indiquant une émission subséquente d'un message de radiomessagerie vers l'UE ;
identifier (1710), au niveau de l'UE, un délai sur la base, au moins en partie, de la réception du message d'alerte en liaison descendante ;
le procédé étant **caractérisé par** les étapes consistant à :
lancer, au niveau de l'UE, un temporisateur sur la base, au moins en partie, de la réception du message de radiomessagerie, le délai comprenant une durée du temporisateur ;
amener l'UE à délivrer en sortie une ou plusieurs indications d'une ou plusieurs actions demandées pour améliorer des performances de liaison, sur la base, au moins en partie, de l'identification du délai ;
établir (1715) une connexion en liaison montante avec le nœud de réseau sur la base, au moins en partie, de la réception du message d'alerte en liaison descendante et d'une expiration du délai, l'établissement de la connexion en liaison montante étant basé, au moins en partie, sur les une ou plusieurs actions demandées ;
communiquer (1720) un message de réponse de radiomessagerie au moyen de la connexion en liaison montante établie.

11. Procédé selon la revendication 10, comprenant en outre l'une des options suivantes :
(i) recevoir, au niveau de l'UE, une entrée en provenance d'un utilisateur de l'UE, le délai comprenant une durée entre la réception du message d'alerte en liaison descendante et la réception de l'entrée en provenance de l'utilisateur ; ou
(ii) recevoir, sur la base, au moins en partie, du message d'alerte en liaison descendante, le message de radiomessagerie ; et
émettre un message de réponse de radiomessagerie sur la base, au moins en partie, de la réception du message de radiomessagerie, l'établissement de la connexion en liaison montante étant basé, au moins en partie, sur le message de réponse de radiomessagerie.

12. Procédé selon la revendication 11, la réception du message d'alerte en liaison descendante comprenant les étapes consistant à :
recevoir une séquence associée au message d'alerte en liaison descendante, la séquence correspondant à un identifiant de l'UE, la séquence étant configurée par le nœud de réseau par l'intermédiaire d'une signalisation de commande, la séquence correspondant à un groupe d'UE comprenant l'UE, ou toute combinaison de ce qui précède ; et
rechercher la séquence associée au message d'alerte en liaison descendante, la séquence fonctionnant à un premier rapport signal/bruit inférieur à un second rapport signal/bruit associé à un signal de synchronisation en provenance du nœud de réseau.

13. Procédé selon la revendication 12, comprenant en outre l'étape consistant à :
identifier la séquence sur la base, au moins en partie, de l'identifiant et/ou d'une mise en correspondance associée au message d'alerte en liaison descendante, l'identifiant de l'UE étant négocié sur une couche strate de non-accès, la mise en correspondance dépendant d'un identifiant d'utilisateur temporaire, le message d'alerte en liaison descendante comprenant un identifiant de contrôle d'accès au support de huit bits ou seize bits, ou toute combinaison de ce qui précède.

14. Procédé selon la revendication 10, l'établissement de la connexion en liaison montante comprenant l'étape consistant à :
lancer un message issu d'un mobile sur la base, au moins en partie, de l'expiration du délai.

15. Procédé selon la revendication 10, comprenant en outre l'étape consistant à :
recevoir une signalisation de commande indiquant une durée d'un temporisateur correspondant au délai, la signalisation de commande comprenant une signalisation de contrôle des ressources radio, une signalisation d'un élément de commande d'une couche de contrôle d'accès au support, une diffusion de bloc d'informations de système, ou une combinaison quelconque de celles-ci.
